# EUROPÄISCHE PATENTANMELDUNG

(11) **EP 4 040 070 A1**
(43) Veröffentlichungstag der Anmeldung: **10.08.2022**
(21) Anmeldenummer: 21154958.9
(22) Anmeldetag: 03.02.2021
(51) Int. Cl.: F24S 40/20, H02S 40/10

(54) **MODULARE REINIGUNGSVORRICHTUNG UND VERFAHREN ZUR MONTAGE UND ZUR ADAPTION EINER SOLCHEN**

(71) Anmelder: Photovoltaik Liebold GbR, 85447 Fraunberg (DE)
(72) Erfinder: LIEBOLD, Pascal, 84034 Landshut (DE)
(74) Vertreter: V.O.

(57) **Zusammenfassung**

Vorliegende Erfindung betrifft eine modulare Reinigungsvorrichtung (1) zum Reinigen der Oberfläche eines Solarmoduls (100), umfassend ein Reinigungsmodul (2) mit wenigstens einem Längsträger (10), wenigstens einem Querträger (20), und wenigstens einem Reinigungsmittel (40), wobei
der Querträger (20) mit einem ersten Abschnitt (21) lösbar am Längsträger (10) befestigbar ist, und mit einem zweiten Abschnitt (22) lösbar am Reinigungsmittel (40) befestigbar ist, und weiter umfasst: einen Antriebsmittelmontagebereich (23), der im ersten Abschnitt (21) angeordnet ist, und an dem wenigstens ein Antriebsmittel (24) montierbar ist, und wenigstens einen Reinigungsmitteltrieb (25), der im zweiten Abschnitt (22) angeordnet ist, und mit dem Reinigungsmittel (40) kraftschlüssig koppelbar ist, und wenigstens einen Koppeltrieb (26), beispielswiese einen Kettentrieb, ausgebildet, um das Antriebsmittel (24) kraftschlüssig mit dem Reinigungsmitteltrieb (25) zu koppeln, um so das Reinigungsmittel (40) anzutreiben. Zudem betrifft die Erfindung ein Verfahren zur Montage und zur Adaption eines solchen Reinigungsmoduls.

## Beschreibung

Vorliegende Erfindung betrifft eine Reinigungsvorrichtung zum Reinigen der Oberfläche eines Solarmoduls.

Solche Reinigungsvorrichtungen sind aus dem Stand der Technik bekannt. Sie umfassen meist eine Träger- oder Rahmenstruktur, an der Reinigungsmittel, beispielsweise rotierbare Bürsten, befestigt sind, und die mit einem Translationsmittel über die Oberfläche des zu reinigenden Solarmoduls geführt werden können. Da solche Solarmodule jedoch unterschiedlich groß sind, müssen entweder unterschiedliche solcher Module zur Verfügung stehen, die dann je nach Größe und insbesondere Breite des Solarmoduls zur Anwendung kommen, oder es müssen mehrere Reinigungsgänge vorgenommen werden, wobei hier mitunter Überlappungen im Reinigungsprozess in Kauf genommen werden müssen.

Den aus dem Stand der Technik bekannten Reinigungsvorrichtungen liegt zudem der Nachteil zugrunde, dass sie meist speziell für die jeweilige zu reinigende Anlagenart hergestellt sind. So sind meist unterschiedliche Reinigungsvorrichtungen für unterschiedliche Arten von Solaranlage, beispielsweise aufgeständerte Solarfelder, Dachanlagen, Segmentanlagen etc., notwendig.

Aufgabe der vorliegenden Erfindung ist es folglich, eine Möglichkeit anzubieten, die eine flexiblere, kostengünstigere und schnellere Reinigung von Solaranlagen erlaubt.

Diese Aufgabe wird durch eine Vorrichtung, einen Querträger und die Verfahren gemäß den unabhängigen Ansprüchen gelöst.

Insbesondere wird diese Aufgabe gelöst durch eine modulare Reinigungsvorrichtung zum Reinigen der Oberfläche eines Solarmoduls, umfassend wenigstens ein Reinigungsmodul mit wenigstens einem Längsträger, wenigstens einem Querträger, und wenigstens einem Reinigungsmittel, beispielsweise wenigstens einer rotierbarer Bürste, wobei am Längsträger wenigstens ein Translationsmittel, beispielsweise ein Kettenfahrwerk oder ein Hydraulikarm, befestigt oder befestigbar ist, über das die Reinigungsvorrichtung relativ zur Oberfläche des Solarmoduls bewegbar ist, wobei der Querträger mit einem ersten Abschnitt lösbar am Längsträger befestigbar ist, und mit einem zweiten Abschnitt lösbar am Reinigungsmittel befestigbar ist, und wobei
der Querträger weiter umfasst, wenigstens einen Antriebsmittelmontagebereich, der im ersten Abschnitt angeordnet ist, und an dem wenigstens ein Antriebsmittel, beispielsweise ein Elektromotor, montiert oder montierbar ist, wenigstens einen Reinigungsmitteltrieb, der im zweiten Abschnitt angeordnet ist, und mit dem Reinigungsmittel kraftschlüssig gekoppelt oder koppelbar ist, und wenigstens einen Koppeltrieb, beispielswiese einen Kettentrieb, ausgebildet, um das Antriebsmittel kraftschlüssig mit dem Reinigungsmitteltrieb zu koppeln, um so das Reinigungsmittel anzutreiben.

Darüber hinaus wird diese Aufgabe gelöst mittels eines Querträgers für ein Reinigungsmodul einer modularen Reinigungsvorrichtung insbesondere nach einem der vorhergehenden Ansprüche, umfassend einen ersten Abschnitt, insbesondere einen ersten Endabschnitt, mit dem der Querträger an einem Längsträger des Reinigungsmoduls lösbar befestigbar ist, und einen zweiten Abschnitt, mit dem der Querträger lösbar an einem Reinigungsmittel, beispielsweise wenigstens einer rotierbaren Bürste, befestigbar ist,
weiter umfassend:
wenigstens einen Antriebsmittelmontagebereich, der im ersten Abschnitt angeordnet ist, und an dem ein Antriebsmittel, beispielsweise ein Elektromotor, montiert oder montierbar ist,
wenigstens einen Reinigungsmitteltrieb, der im zweiten Abschnitt angeordnet ist, und mit dem Reinigungsmittel kraftschlüssig koppelbar ist, und
wenigstens einen Koppeltrieb, beispielswiese einen Kettentrieb, um das Antriebsmittel kraftschlüssig mit dem Reinigungsmitteltrieb zu koppeln, um so das Reinigungsmittel anzutreiben.

Auch wird die Aufgabe auch gelöst durch ein Verfahren zur Montage eines Reinigungsmoduls einer Reinigungsvorrichtung gemäß der hierin beschriebenen Art, umfassend die folgenden Schritte: Aufsetzten des Reinigungsmittels auf eine Oberfläche; Koppelung des Reinigungsmittels mit wenigstens einem Querträgers am zweiten Abschnitt; Einführen des Längsträgers in die Längsträgeraufnahme des wenigstens einen Querträgers am zweiten Abschnitt, so dass zwischen Querträger und Längsträger die biegesteife Einspannung gebildet wird;
Schließen der Verschiebarretierung wenigstens eines Querträgers zur Verschiebarretierung des Querträgers am Längsträger.

Die Erfindung betrifft in diesem Zusammenhang weiter ein Verfahren zur Anpassung der Abmessungen eines Reinigungsmoduls einer Reinigungsvorrichtung gemäß der hierin beschrieben Art, umfassend die folgenden Schritte: Aufsetzten des Reinigungsmittels auf eine Oberfläche unter Entlastung des wenigstens einen Querträgers; Offnen der Verschieb arretierung wenigstens eines Querträgers; Verschieben des wenigstens einen Querträgers relativ zum Längsträger in Verschieberichtung unter Entkoppelung des Reinigungsmittels vom Querträger; optional, Adaption des Längsträgers in seiner Länge derart, dass eine neue geforderte Länge des Längsträgers zur Herstellung eines in seiner Länge geänderten Reinigungsmittels erreicht wird;
Adaption des Reinigungsmittels in seiner Länge und/oder Austausch des Reinigungsmittels gegen ein in seiner Länge verschiedenes, anderes Reinigungsmittel; Verschieben des wenigstens einen Querträgers relativ zum Längsträger in entgegengesetzter Verschieberichtung unter Kopplung des adaptierten Reinigungsmittels mit dem wenigstens einen Querträger.

Unter einem Längsträger wird im Folgenden jede Art von Träger verstanden, der eine Längsausdehnung in einer Haupterstreckungsrichtung aufweist. Solche Längsträger können einstückig als auch modular ausgeführt sein, sie können gerade oder mit Versatzstücken gewinkelt und sich trotzdem in der Haupterstreckungsachse erstreckend ausgebildet sein. Sie können zudem aus mehreren Einzelteilen, aber auch aus einem einzigen Teil oder Element bestehen.

Unter einem Reinigungsmittel wird hier jede Art von Reinigungsmittel verstanden, beispielsweise wenigstens eine, aber auch mehrere rotierbare Bürsten. Optional können in Kombinationen mit solchen Bürsten auch Reinigungsmittel, Fluide und deren Zuführeinrichtungen darunter subsumiert werden. Optional sind die einzelnen Teile der Reinigungsmittel, beispielsweise rotierbare Bürsten, miteinander koppelbar, insbesondere derart koppelbar, dass sie über einen einzelnen Antrieb angetrieben, beispielsweise in Rotation versetzt, werden können.

Ein Translationsmittel kann beispielsweise ein Kettenfahrwerk, ein Palfingerarm, ein Hängesystem, an dem das Modul verfahren werden kann, oder jede andere Art von Translationsmittel sein, über das die Reinigungsvorrichtung bzw. das Reinigungsmodul relativ zur Oberfläche des Solarmoduls bewegbar ist bzw. bewegt werden kann.

Unter einem Antriebsmittel werden im Zuge dieser Offenbarung alle Arten von Antriebsmittel verstanden, die dem Antrieb beispielsweise des Reinigungsmittels dienen. Hier sind Elektromotoren, Verbrennungsmotoren, Hydraulikmotoren und jede andere Art von Motoren und Antrieben verwendbar. Es handelt sich bei einem Antriebsmittel optional um ein aktives Antriebsmittel.

Unter einem Trieb wird verstanden, ein Mittel verstanden, das kraftschlüssig mit einem Antriebsmittel und einem davon getrennten Element koppelbar oder gekoppelt ist, um so dieses Element über das Antriebsmittel, beispielsweise die zuvor genannten Motoren, anzutreiben. Ein solcher Trieb kann beispielsweise ein Kettentrieb, ein Riementrieb oder ein Kardantrieb sein.

Unter kraftschlüssig wird im Umfang dieser Offenbarung verstanden, dass eine auf ein erstes Element wirkende Kraft wenigstens in einer Achse und/oder in einer Rotationsachse auf das zweite Element übertragbar ist.

Kern der Erfindung ist der modulare Aufbau des Reinigungsmoduls, umfassend wenigstens einen Längsträger, wenigstens einen Querträger und wenigstens ein Reinigungsmittel. Der Querträger ist lösbar sowohl am Reinigungsmittel als auch am Längsträger befestigbar, und im Wesentlichen als aktive Einheit aufgebaut. Er umfasst einen Montagebereich für das Antriebsmittel, beispielsweise einen Elektromotor, und den Reinigungsmitteltrieb, die miteinander kraftschlüssig über den Koppeltrieb verbindbar sind, um so das Reinigungsmittel anzutreiben. Der Querträger kann also als aktive Einheit, umfassend die wesentlichen mechanischen Antriebsmittel zum Antrieb der Reinigungsmittel am Längsträger und dem Reinigungsmittel befestigt werden.

Da am Querträger sowohl das Antriebsmittel für das Reinigungsmittel und das Reinigungsmittels selbst anordbar sind, ergibt sich eine variable Konstruktion zur Herstellung, dem Betrieb und der Montage bzw. der Anpassung des Reinigungsmoduls. Über die Ausbildung des Koppeltriebs ist eine räumliche Trennung zwischen dem Antriebsmittelmontagebereich bzw. dem Antriebsmittel und dem Reinigungsmitteltrieb möglich. Der Querträger bildet optional eine aktive Einheit, die mit den optional passiv ausgebildeten Reinigungsmitteln und Längsträgern verbunden werden kann.

Der Querträger ist auch ohne montiertes Antriebsmittel und/oder Koppeltrieb und/oder Reinigungstrieb verwendbar. Er fungiert dann als passiver Querträger. Auf diese Bauform wird im Folgenden noch im Detail eingegangen.

Bei der Verwendung einer Mehrzahl an Querträgern kann über eine optional freie Anordnung der Querträger an unterschiedlichen Positionen am Längsträger, eine Anpassung des Reinigungsmoduls an unterschiedliche geforderte Reinigungsmittelabmessungen erfolgen. Bei der Verwendung unterschiedlich langer Reinigungsmittel, beispielsweise unterschiedlich langer rotierbarer Bürsten, kann über die Positionierung des bzw. der Querträger relativ zum Längsträger eine Anpassung an diese unterschiedlichen Längen erfolgen.

Insbesondere ist es denkbar, wenigstens zwei Querträger am Längsträger anzuordnen, die wenigstens ein dazwischen gelagertes Reinigungsmittel tragen. Optional kann also das erfindungsgemäße Reinigungsmodul wenigstens zwei Querträger und dazwischen, wenigstens ein, an gegenüberliegenden Seiten der Querträger gelagertes inneres Reinigungsmittel aufweisen. Optional kann wenigstens ein auf einer Außenseite wenigstens eines der Querträger gelagertes und optional frei auskragendes äußeres Reinigungsmittel vorgesehen sein. Auch ist es denkbar, dass das Reinigungsmodul einen Querträger und wenigstens ein auf einer Seite des Querträgers gelagertes und optional frei auskragendes äußeres Reinigungsmittel aufweist. Über diese variable Konstruktion können unterschiedliche Reinigungsmodulabmessungen zur Verfügung gestellt werden.

Durch eine Anpassung des Längsträgers, wie sie im Folgenden noch im Detail erläutert werden wird, kann diese Variabilität weiter gesteigert werden.

Auch ist es denkbar, dass, betrachtet in einer Draufsicht auf den Längsträger, linksseitig und rechtsseitig Querträger angeordnet oder anordbar sind, die jeweils Reinigungsmittel tragen, wobei optional in hauptaxialer Abfolge entlang der Haupterstreckungsachse A_{HL} des Längsträgers, die Querträger der linken Seite und die Querträger der rechten Seite hintereinander versetzt angeordnet sind. Wie im Folgenden noch beschrieben, ist auf diese Weise eine effektive Kopplung mehrerer Reinigungsmodule in axialer Erstreckungsrichtung, optional koaxial zur Haupterstreckungsachse des Längsträgers, unter geringer Fugenbildung zwischen den einzelnen Modulen möglich.

Die erwähnten Antriebsmittel können insbesondere bei einer solchen Ausführungsform für mehrere Module, mehrere Querträger und/oder mehrere Reinigungsmittel ihre Anwendung finden. Auch hier wird im Folgenden im Detail noch eingegangen werden.

Optional ist das Reinigungsmodul derart ausgebildet, dass die bevorzugte Reinigungsrichtung R_{R} quer zur Haupterstreckungsachse A_{HL} des Längsträgers verläuft.

Optional ist der erste Abschnitt als ein erster Endabschnitt des Querträgers und/oder der zweite Abschnitt als ein zweiter Endabschnitt des Querträgers ausgebildet. Es ist auch denkbar, dass der zweite Abschnitt ein frei auskragender, von der Oberfläche des Solarmoduls beanstandeter Abschnitt des Querträgers ist.

Der Querträger ist optional als Scheibe mit einer Länge, einer Breite und einer Dicke ausgebildet, wobei die Dicke weniger als 60%, optional weniger als 40% der durchschnittlichen Breite beträgt. Die Dicke der Scheibe erstreckt sich optional coachsial zur Haupterstreckungsachse des Längsträgers.

Optional erstreckt sich das Reinigungsmittel mit einer Haupterstreckungsachse A_{HR} achsparallel zur Haupterstreckungsachse A_{HL} des Längsträgers. Hier sind allerdings auch Winkelabweichungen von dieser Haupterstreckungsachse A_{HL} um optional ±15°, weiter optional um ±10° und weiter optional um ±5° denkbar. Optional ist eine Neigung in Reinigungsrichtung denkbar.

Optional erstreckt sich die Haupterstreckungsachse A_{HR} des Reinigungsmittels beabstandet von der Haupterstreckungsachse A_{HL} des Längsträgers. Optional erstreckt sie sich bezüglich der Oberfläche des zu reinigenden Solarmoduls näher an dieser Oberfläche als der Längsträger. Optional ist der Querträger, im am Längsträger befestigten Zustand, als frei aus dem Längsträger auskragender Kragarm ausgebildet. Wie im Folgenden noch im Detail beschrieben sind, insbesondere in diesem Zusammenhang, vorzugsweise nur am Längsträger Translationsmittel und Stützmittel vorgesehen; die Querträger weisen optional keine solchen Mittel auf, sodass sie frei am Längsträger eingespannt sind und insbesondere um eine Achse eingespannt sind, die koaxial zur Achse des Längsträgers verläuft.

Optional ist insbesondere in diesem Zusammenhang der Längsträger derart ausgebildet, dass er die von Querträgern eingetragenen Biegemomente um die Längsachse des Längsträgers abträgt. Er ist optional um diese Achse torsionssteif ausgebildet. Optional ist der Längsträger auch um eine dazu orthogonal ausgebildete Achse torsionssteif ausgebildet, um u.a. wenigstens teilweise frei auskragend an dem Translationsmittel, bspw. einem Palfingerarm befestigt zu werden oder frei aus Translationsmitteln, beispielsweise einem Kettenantrieb, hervorzustehen. Es ist eine Ausbildung des Längsträgers als Mehrfeldträger, als Einfeldträger, als Gerberträger, aber auch als Kombination zwischen dergleichen beidseitig gelagerten Trägern und freien Kragarmen möglich.

Optional ist die biegesteife Verbindung zwischen Querträger und Längsträger lösbar, wie dies im Folgenden noch im Detail beschrieben werden wird.

Optional weist der Querträger eine Längsträgeraufnahme auf, die derart mit dem Längsträger koppelbar ist, dass im Kopplungszustand eine Einspannung zwischen Querträger und Längsträger gebildet wird, sodass der Querträger um die Haupterstreckungsachse A_{HL} des Längsträgers biegesteif am Längsträger angeordnet ist. Eine solche Längsträgeraufnahme kann beispielsweise eine oder mehrere Aussparungen umfassen, in die der Längsträger oder Teile davon einschiebbar und biegesteif, insbesondere um seine Längsachse, befestigbar ist. Hier kann eine Presspassung zwischen Längsträgeraufnahme und Längsträger vorhanden bzw. herstellbar sein.

Optional ist, insbesondere aus diesem Grund, eine Verschiebearretierung vorgesehen, die eine axialen Fixierung des Querträger auf dem Längsträger und/oder eine Fixierung zur Abtragung des Biegemoments um die Längsträgeraufnahme garantieren kann. Auf dieses optionale Merkmal wird im Folgenden noch im Detail eingegangen.

Optional ist der Längsträger in einer Verschieberichtung R_{V}, insbesondere achsparallel zu seiner Haupterstreckungsachse A_{HL}, in die Längsträgeraufnahme einführbar. Dies erfolgt optional unter Bildung einer Einspannung zwischen Längsträger und Querträger, um die Haupterstreckungsachse A_{HL} des Längsträgers, wie dies zuvor bereits erläutert wurde.

Die Definition des Einführens des Längsträgers in einer Verschieberichtung Rv in die Längsträgeraufnahme ist als Relativbewegung zu verstehen. Umfasst ist also sowohl ein "Einführen" des Längsträgers in einen Querträger, mittels Bewegen des Längsträgers, als auch ein "Einführen", indem der Querträger auf den Längsträger zu bewegt wird. Natürlich ist auch eine beidseitige Bewegung von Längsträger und Querträger umfasst. Der Begriff Einführen umfasst zudem optional, ein Verschieben, ein Einsetzen, Einklemmen, Einschwenken etc., ein translatorisches Einführen, ein rotatorisches Einführen

Es ist auch denkbar, dass der Längsträger eine Trägeraufnahme und der Querträger einen entsprechenden Fortsatz aufweist, um den Längsträger mit dem Querträger zu koppeln. Der Träger kann beispielsweise eine Nutenschiene und der Querträger einen oder mehrere entsprechende Nutensteine aufweisen. Auch bei einer solchen Ausführungsform gilt alles, was in Bezug auf die Verschieberichtung und das Einführen zuvor genannt wurde.

Das Einführen kann achsparallel zur Haupterstreckungsachse des Längsträgers A_{HL} und/oder achsparallel zu einer Haupterstreckungsachse A_{HR} des Reinigungsmittels erfolgen.

Wie bereits erwähnt, ist optional der Querträger lösbar und an unterschiedlichen Positionen am Längsträger befestigbar. Diese Positionen können sich in definierten Abschnitten erstrecken, es ist aber auch denkbar, dass der Querträger an sämtlichen Positionen am Längsträger entlang der Haupterstreckungsachse des Längsträgers positionierbar ist.

Bei einem Längsträger, der aus mehreren über Kopplungsmittel koppelbaren Teilen, insbesondere entlang deren Haupterstreckungsachsen koppelbaren Teilen besteht, ist optional eine Positionierung entlang wenigstens zweier dieser Teile möglich. Die entsprechenden Kopplungsmittel zwischen den Längsträgern sind dabei vorzugsweise so ausgebildet, dass der Querträger mit seinen Längsträgeraufnahmen über diese Kopplungsmittel hinweg bewegbar ist und insbesondere verschiebbar ist. Auch kann eine Befestigung des Querträgers am Längsträger im Bereich dieser Kopplungsmittel möglich sein.

Wie bereits erwähnt, ist optional der Längsträger, insbesondere in seiner Länge, in Richtung der Haupterstreckungsachse A_{HL} variabel bzw. anpassbar ausgebildet.

Mit dieser Definition ist auch umfasst, dass eine Mehrzahl unterschiedlicher Längsträger vorgesehen ist, die untereinander zum Erreichen unterschiedlicher Längen austauschbar und/oder miteinander kombinierbar sind. Es ist denkbar, die Längsträger über entsprechende Adaptermittel, Versatzstücke etc. zu "angepassten" Längsträgern umzubauen bzw. diese als solche vorzusehen.

Optional umfasst der Längsträger eine Mehrzahl an insbesondere parallel zueinander verlaufende Tragrohre, und der Querträger eine Mehrzahl dazu korrespondierende Trägerrohraufnahmen derart, dass darin die Trägerrohre einführbar sind, optional unter Bildung einer Einspannung, um die Haupterstreckungsachse A_{HL} des Längsträgers zwischen Längsträger und Querträger und/oder die Haupterstreckungsachse A_{HR} des Bürstenmittels.

Der Längsträger kann optional aus einer Mehrzahl an unterschiedlichen Teilen und insbesondere den Trägerrohren bestehen. Diese Teile bzw. Trägerrohre können wieder in ihrer Länge adaptierbar sein, es können mehrere Teile bzw. Trägerrohre vorgesehen sein, die miteinander koppelbar sind und/oder gegeneinander ausgetauscht werden können, um unterschiedliche Abmessungen des Längsträgers zu erstellen. Die Längsträgeraufnahme umfasst optional die Trägerrohraufnahmen, sodass zur Bildung des Längsträgers die einzelnen Teile bzw. Trägerrohre in die Trägerrohraufnahmen eingeführt werden können. Auch hier wird der Begriff "Einführen" wieder wie oben definiert verstanden.

Insbesondere in diesem Zusammenhang ist es denkbar, dass der Längsträger nur in einem Teilbereich aus einer Mehrzahl solcher Trägerrohre besteht und in einem anderen Teilbereich eine andere Bauweise aufweist, beispielsweise Versatzstücke, fasst, die mit anderen Trägerrohren oder einer anderen Anzahl an Trägerrohren oder anderen Elementen miteinander verbunden sind. Optional sind auch in Bezug auf die Teile bzw. die Trägerrohre Kopplungsmittel zum Verbinden einzelner Trägerrohre innenseitig ausgeführt.

Optional ist ein Koppelbereich zwischen zwei Längsträgern und/oder zwei Trägerrohren bzw. das Kopplungsmittel außenseitig vorsprungsfrei ausgeführt. Dies kann beispielsweise durch eine Innengewindeanordnung, eine Steckverbindung etc. erreicht werden.

Eine Ausbildung des Längsträger ist auch unter Zwischenschaltung und/oder statischer Integration weiterer Mittel, beispielswiese der Translationsmittel denkbar.

Optional wird durch eine Kombination des Längsträgers mit den Querträgern eine Rahmenstruktur gebildet. Optional steifen die Querträger einzelne Elemente des Längsträgers und insbesondere die zuvor erwähnten Trägerrohre derart aus, dass sich ein biegesteifer Rahmen ergibt.

Zur Stabilisierung können auch weitere Aussteifungsmittel, beispielsweise Fachwerkstreben etc., vorgesehen werden, die vorzugsweise lösbar am Längsträger und/oder zwischen Querträger und Längsträger anordbar sind.

Optional weist wenigstens ein Querträger eine öffenbare und arretierbare Verschiebearretierung derart auf, dass er in einem Montagezustand, in eine Verschieberichtung Rv entlang der Haupterstreckungsachse A_{HL} relativ zum Längsträger am Längsträger verschiebbar ist, und in einem Betriebszustand gegen ein Verschieben wenigstens in Verschieberichtung Rv festlegbar sind. Eine solche Verschiebearretierung kann beispielsweise eine Klemme sein, eine Hülse mit entsprechender Arretierungsschraube, eine Gewindeanordnung etc.

Optional ist diese Verschiebearretierung werkzeuglos lösbar, beispielsweise mittels eines Arretierungshebels, der von einer Bedienperson bedient werden kann, um die Verschiebearretierung zu lösen und wieder zu schließen.

Eine solche Verschiebearretierung kann optional fest am Querträger angeordnet sein. Sie kann aber auch variabel am Querträger positionierbar sein. Sie kann auch variabel am Längsträger befestigt bzw. anordbar sein. Optional ist bei einer solchen Ausführungsform die Verschiebearretierung beidseitig zu einem Querträger angeordnet, um beispielsweise den Querträger linksseitig und rechtsseitig zu arretieren.

Optional umfasst der Querträger am zweiten Abschnitt wenigstens ein Reinigungsmittellager und das Reinigungsmittel an einem Lagerabschnitt wenigstens ein korrespondierendes Reinigungsmittelgegenlager, oder umgekehrt. Das Reinigungsmittellager und das Reinigungsmittelgegenlager sind optional passiv ausgeführt, sodass sie lediglich eine Lagerung und insbesondere eine bewegliche Lagerung, beispielsweise um wenigstens eine Achse, wie beispielsweise eine Rotation, erlauben. Optional umfasst der Reinigungsmitteltrieb das Reinigungsmittellager, oder umgekehrt. Das Reinigungsmittellager kann bspw. Kugellager, Walzenlager, Lagerböcke, Achselemente etc. umfassen. Das Reinigungsmittelgegenlager kann dazu komplementäre Bauteile, bspw. Kugellager, Walzenlager, Lagerböcke, Achselementaufnahmen etc. umfassen.

Optional ist das Reinigungsmittel in einem Montagezustand mit dem Querträger und insbesondere dem Reinigungsmitteltrieb koppelbar und/oder entkoppelbar, und in einem Betriebszustand mit dem Querträger und insbesondere mit dem Reinigungsmitteltrieb unlösbar kraftschlüssig gekoppelt. Selbiges gilt optional auch für das Reinigungsmittellager und das Reinigungsmittelgegenlager. Optional ist der Reinigungsmitteltrieb kraftschlüssig mit dem Reinigungsmittel und/oder dem Reinigungsmittelgegenlager bzw. dem Reinigungsmittellager derart gekoppelt, dass bei einem Antrieb des Reinigungsmitteltriebs das Reinigungsmittel angetrieben wird.

Wie im Folgenden noch im Detail beschrieben, ist es denkbar, einen Querträger mit einem rein passiven Lager auszuführen, und einen weiteren Querträger mit einem aktiven Lager, also mit einem aktiv angetriebenen Reinigungsmitteltrieb und somit einem aktiv angetriebenen Reinigungsmittel. Ein Querträger, der einen aktiv angetrieben Reinigungstrieb aufweist, der mit einem Reinigungsmittel koppelbar ist, kann als aktiver Querträger bezeichnet werden. Ein Querträger ohne eigenen Antrieb als ein passiver Querträger. Es ist denkbar, Reinigungsmittel so auszubilden, dass sie in einem Abschnitt angetrieben werden und diese Antriebskraft, beispielsweise eine Rotation, über einen Übertragungskörper, beispielsweise ihren Korpus, insbesondere längsaxial übertragen. Auch ist es denkbar, mehrere Reinigungsmittel derart zu koppeln, dass ein angetriebenes Reinigungsmittel die anderen Reinigungsmittel antreibt.

Optional umfasst das Reinigungsmittellager wenigstens ein Achselement, und das Reinigungsmittelgegenlager wenigstens eine Achselementaufnahme oder umgekehrt, wobei das Achselement in die Achselementaufnahme einführbar ist, um das Reinigungsmittel mit dem Querträger kraftschlüssig zu koppeln, und aus dieser herausführbar ist, um das Reinigungsmittel vom Querträger zu entkoppeln, beispielsweise in einer Verschieberichtung Rv entlang der Haupterstreckungsachse A_{HL} des Längsträgers in die Achselementaufnahme einführbar und/oder aus dieser herausführbar ist. Kraftschlüssig zu koppeln, kann hier bedeuten, dass das Reinigungsmittel durch eine Lagerkraft gekoppelt ist, sodass es beispielsweise gegen eine Gewichtskraft oder eine Horizontalkraft am Querträger gekoppelt ist, es ist aber auch denkbar, dass kraftschlüssig koppeln bedeutet, dass eine auf einen Reinigungsmitteltrieb am Querträger wirkende Antriebskraft auf das Reinigungsmittel übertragen werden kann. Das Achselement oder das Achsgegenelement können Teil des Reinigungsmitteltriebs und insbesondere über den Koppeltrieb antreibbar ausgebildet sein.

Optional ist, wie bereits erwähnt, das Achselement oder die Achselementaufnahme kraftschlüssig mit dem Reinigungsmitteltrieb koppelbar oder gekoppelt. Bei einer solchen Ausführung ist das Achselement oder die Achselementaufnahme antreibbar, sodass ein daran gelagertes Antriebsmittel ebenfalls angetrieben werden kann. Es ergibt sich eine aktive Lagerung, die in Verbindung mit einem entsprechenden Querträger den aktiven Querträger ergibt. Optional kann ein Achselement oder eine Achselementaufnahme aber auch passiv ausgeführt sein, sodass sie, beispielsweise frei und insbesondere rotierbar gelagert, an einem Querträger angeordnet ist, der dann als der passive Querträger bezeichnet werden kann.

Auch ist es denkbar, ein Achselement bzw. eine korrespondierende Achselementaufnahme derart am Querträger vorzusehen, dass beidseitig Reinigungsmittel daran befestigbar sind, insbesondere mit Achselementaufnahmen bzw. korrespondierenden Achselementen. Es ist beispielsweise auf diese Art möglich, am Querträger links- und rechtsseitig ein Reinigungsmittel vorzusehen. Das linksseitige und/oder das rechtsseitige Reinigungsmittel kann beispielsweise mit einem weiteren Querträger gelagert werden oder als frei auskragendes Reinigungsmittel ausgeführt sein. Es ist denkbar, zwei frei auskragende Reinigungsmittel, je eines links- und rechtsseitig auszubilden.

Aufgrund der erfindungsgemäßen Ausführung des Querträgers, des Längsträgers und des Reinigungsmittels können eine unterschiedliche Anzahl variabler Reinigungsmodule zur Verfügung gestellt werden. Durch die entkoppelbar Anordnung von Reinigungsmittellager und Reinigungsmittelgegenlager bzw. Achselement und Achselementaufnahme ist eine sehr einfache und optional werkzeuglose Koppelung und Entkoppelung zwischen Querträger und Reinigungsmittel möglich.

Zur Kopplung bzw. Entkopplung von Reinigungsmittellager und Reinigungsmittelgegenlager ist optional der Querträger entlang des Längsträgers verschiebbar ausgeführt. Auf diese Weise kann das Reinigungsmittel am Querträger gekoppelt bzw. entkoppelt werden. Auch hier gilt, ähnlich wie für das "Einführen" auch für das "Verschieben" die zuvor gebrachte Definition der relativen Bewegung zwischen Querträger und Längsträger. Verschieben umfasst im Umfang dieser Erfindung auch das Herausziehen des Längsträgers aus Längsträgeraufnahmen am Querträger und das Einführen nach einer Neupositionierung des Querträgers und/oder einer Adaption des Längsträgers. So kann ein verlängerter, verkürzter, anderweitig adaptierter Längsträger, ein anderer Längsträger oder der gleiche Längsträger verwendet werden, wobei der Querträger optional an der gleichen oder unterschiedlichen Positionen positioniert und optional verschiebegesichert wird.

Optional ist eine Mehrzahl an Reinigungsmodulen entlang der Haupterstreckungsachse A_{HL} des Längsträgers und/oder orthogonal zu dieser Haupterstreckungsachse miteinander, optional biegesteif, koppelbar ausgebildet. Hier sind auch Anordnungen der Module in Mischausrichtungen, also orthogonal und achsaxial versetzt mit umfasst. Optional ist entlang der Haupterstreckungsachse und/oder orthogonal dazu, wenigstens ein, optional eine Mehrzahl and Translationsmitteln, insbesondere aktive und/oder passive Translationsmittel, vorgesehen. Auch hier gilt die Bemerkung zur Mischausrichtung. Ein aktives Translationsmittel ist ein angetriebenes Translationsmittel, ein passives Translationsmittel ist ein nicht angetriebenes Translationsmittel, beispielsweise eine passive Rolleinheit ohne Antrieb.

Das Reinigungsmodul kann grundsätzlich optional über wenigstens ein Reinigungsmittel über die zu reinigende Oberfläche bewegt (hier dient das Reinigungsmittel optional als aktives Translationsmittel) und/oder auf dieser abgestützt werden (hier dient das Reinigungsmittel optional als passives Translationsmittel und insbesondere als Abstützung).

Optional ist ein Adaptermittel zur Befestigung des Translationsmittels am Längsträger vorgesehen. Das Adaptermittel umfasst optional eine Adapter-Längsträgeraufnahme, die mit dem Längsträger koppelbar ist. Das Adaptermittel ist optional in einer Verschieberichtung Rv, insbesondere achsparallel zur Haupterstreckungsachse A_{HL} des Längsträgers und/oder achsparallel zu einer Haupterstreckungsachse A_{HR} des Reinigungsmittels, auf den Längsträger montierbar, insbesondere aufsteckbar und/oder darauf verschiebbar und/oder relativ dazu verschiebbar.

Das Adaptermittel kann in Bezug auf die Trägeraufnahme entsprechend dem Querträger ausgebildet sein. Hier gilt dann sämtlich hierin dazu Genanntes. Optional ist die Adapter-Längsträgeraufnahme des Adaptermittels mit der Längsträgeraufnahme des Querträgers korrespondierend kongruent, optional identisch ausgebildet. Auch ist es denkbar, dass die Adapter-Längsträgeraufnahme entlang der Haupterstreckungsachse A_{HL} des Längsträgers fluchtend mit der Längsträgeraufnahme des Querträgers anordbar ist, sodass, der Längsträger mit einem Durchführabschnitt sowohl in die Längsträgeraufnahme des Querträgers als auch die Adapter-Längsträgeraufnahme des Adaptermittels einführbar ist. Ein solcher Durchführabschnitt kann räumlich begrenzt sein, er kann aber auch die gesamte Länge oder im Wesentlichen die gesamte Länge des Längsträgers umfassen. Auch hier gilt wieder die Definition des zuvor genannten "Einführens".

Durch ein solches Fluchten kann das Reinigungsmodul modular angepasst werden, indem optional an unterschiedlichen Positionen entlang des Längsträgers Adaptermittel zur Montage von Translationsmitteln, sei es passiven oder aktiven Translationsmittel, angeordnet werden können. Die Adapter-Längsträgeraufnahme ist optional derart ausgebildet, dass eine Verschiebbarkeit des Adaptermittels entlang des Längsträgers möglich ist. Auch hier können entsprechende Verschiebearretierungen ihre Anwendung finden.

Optional umfasst das Adaptermittel wenigstens einen Translationsmittelantriebsmontagebereich, zum kraftschlüssigen Anschluss eines Translationsmittelantriebs, beispielsweise eines Elektromotors für ein Translationsmittel. Je nach Bedarf kann so ein Adaptermittel mit oder ohne aktivem Antriebsmittel am Längsträger befestigt werden. Optional ist der Translationsmittelantrieb getrennt vom Antriebsmittel für die Reinigungsmittel ausgebildet. Es ist dabei denkbar, ein Antriebsmittel zur Verfügung zu stellen, das bei geeigneter Anordnung am Querträger und am Adaptermittel für den Antrieb des Translationsmittels als auch des Reinigungsmittels verwendet werden kann. Hier ist es Beklagte denkbar, eine Antriebsachse am Querträger vorzusehen, die zudem am Adaptermittel eingreift und mit dem Translationsmittel kraftgekoppelt ist, sodass das Antriebsmittel über den Kopplungstrieb sowie das Reinigungsmittel als auch das Translationsmittel antreibt. Hier ist optional eine Getriebevorrichtung und/oder eine Kupplungsvorrichtung vorgesehen, um den Antrieb zwischen Reinigungsmittel und Translationsmittel zu trennen.

Obige oder ähnliche Adaptermittel können auch zur Montage und Befestigung weitere Vorrichtungsmittel, wie z.B. Montageplattformen, Fluidzuführungen, Sensormitteln, Steuerungsmitteln, Hebeanschlüssen zum Kopplung mit Hebemitteln etc., ausgebildet und vorgesehen sein.

Wie erwähnt, betrifft die Erfindung auch einen Querträger für ein Reinigungsmodul einer solchen modularen Reinigungsvorrichtung. Aus Redundanzgründen wird im Einzelnen nicht auf sämtliche Ausführungsformen dieses Querträgers verwiesen, sondern auf sämtliches hierin Genannte, und insbesondere auf das Reinigungsmodul und seinen enthaltenen Querträger Erläuterte verwiesen. Es ist identisch auf den erfindungsgemäßen Querträger übertragbar und umgekehrt.

Dieses gilt zudem über das erfindungsgemäße Verfahren zur Montage eines Reinigungsmoduls als auch ein Verfahren zur Anpassung der Abmessungen eines Reinigungsmoduls, wie sie zuvor definiert wurden.

Weitere Ausführungsformen der Erfindung ergeben sich aus den Unteransprüchen.

Im Folgenden werden die Merkmale der Erfindung anhand von Ausführungsbeispielen beschrieben, wie sie in den beiliegenden Zeichnungen näher erläutert werden. Hierbei zeigen:
Fig. 1- eine isometrische Darstellung einer ersten Ausführungsform der erfindungsgemäßen Reinigungsvorrichtung bzw. des erfindungsgemäßen Reinigungsmoduls;
Fig. 2 - eine isometrische Detaildarstellung der Ausführungsform gemäß Fig. 1 von unten;
Figs. 3-5 - Darstellungen unterschiedlicher Ausführungsformen bzw. unterschiedlicher Modulanordnungen;
Figs. 6-9 - eine Ausführungsform eines Querträgers in unterschiedlichen Ansichten, wie verwendet in der Ausführungsform gemäß Fig. 1;
Figs. 10 und 11 - Detaildarstellungen des Querträgers gemäß Fig. 6;
Figs. 12-14 - Detaildarstellungen unterschiedlicher Ausführungsformen von Translationsmitteln;
Fig. 15 - eine Darstellung einer Ausführungsform eines Adaptermittels;
Figs. 16 und 17 - eine weitere Ausführungsform der erfindungsgemäßen Reinigungsvorrichtung;
Figs. 18-20 - eine weitere Ausführungsform der erfindungsgemäßen Reinigungsvorrichtung;
Figs. 21-22 - eine weitere Ausführungsform der erfindungsgemäßen Reinigungsvorrichtung;
Figs. 23-26 - eine weitere Ausführungsform der erfindungsgemäßen Reinigungsvorrichtung;
Figs. 27-29 - eine weitere Ausführungsform der erfindungsgemäßen Reinigungsvorrichtung;
Figs. 30 und 31 - eine Detaildarstellung eines Reinigungsmoduls der Ausführungsform gemäß Fig. 27;
Figs. 32 und 33 - Draufsichten auf weitere Ausführungsformen der erfindungsgemäßen Reinigungsvorrichtung.

Im Folgenden werden für gleiche und gleich wirkende Bauteile dieselben Bezugsziffern verwendet, wobei zur Unterscheidung bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein, und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

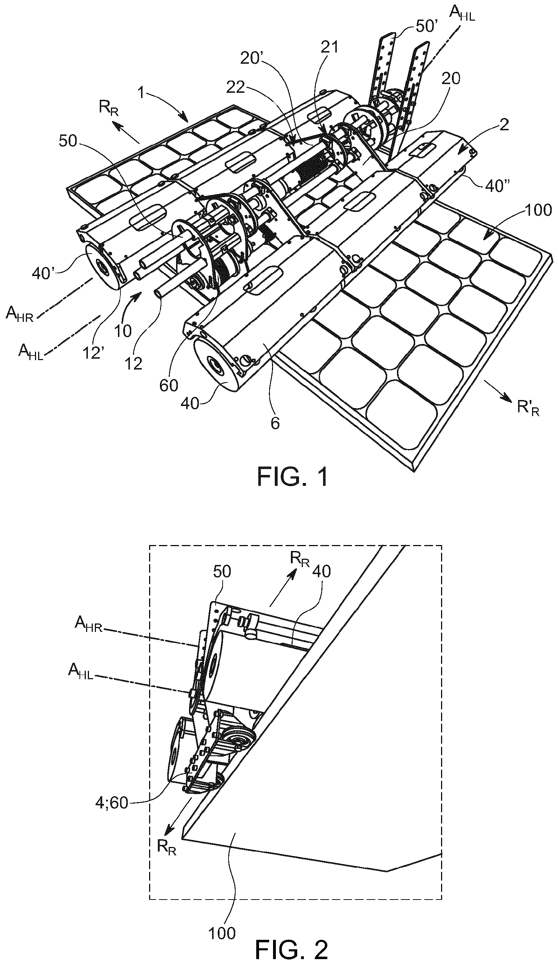

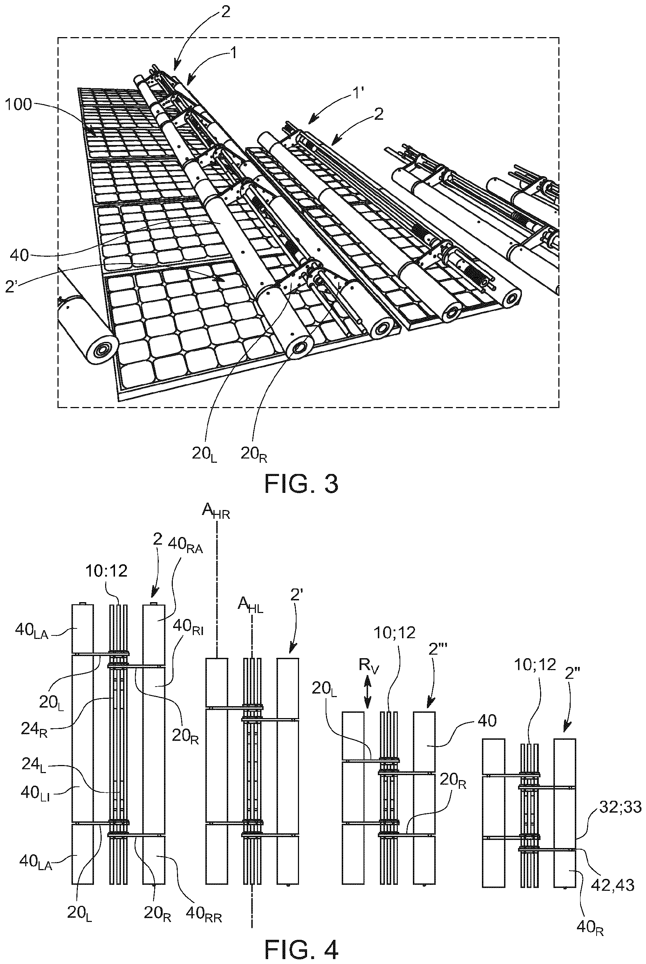

Fig. 1 zeigt eine Ausführungsform der erfindungsgemäßen modularen Reinigungsvorrichtung 1 zum Reinigen der Oberfläche eines Solarmoduls 100. Die hier dargestellte Reinigungsvorrichtung 1 umfasst ein Reinigungsmodul 2. Es ist denkbar, mehrere Reinigungsmodule 2 in serieller Anordnung anzuordnen, wie dies beispielsweise in den Figs. 3-5 dargestellt ist.

Das Reinigungsmodul 2 umfasst wenigstens einen Längsträger 10, der hier optional aus einer Mehrzahl an Trägerrohren 12 gebildet wird, die in im Wesentlichen paralleler Anordnung zueinander in einer Haupterstreckungsachse A_{HL} des Längsträgers 10 verlaufen. Das Reinigungsmodul 2 weist weiter eine Mehrzahl an Reinigungsmitteln 40 auf, die hier optional in Form von rotierbaren Bürsten 40 unter anderem in serieller als auch in paralleler Ausrichtung bezüglich der Haupterstreckungsachse A_{HL} angeordnet sind. Die einzelnen Bürsten bzw. Reinigungsmittel können miteinander derart kraftgekoppelt sein, dass wenigstens eine Bürste aktiv angetrieben werden kann und ihre Antriebsbewegung auf die anderen Bürsten überträgt.

Das Reinigungsmodul 2 kann zudem ein Translationsmittel 60 aufweisen, beispielsweise ein Kettenfahrwerk, das hier ohne die notwendige Kette bzw. einen Raupenriemen dargestellt ist, und über das die Reinigungsvorrichtung 1 bzw. das Reinigungsmodul 2 relativ zur Oberfläche des Solarmoduls 100 bewegbar ist. Bei dieser Ausführungsform ist die bevorzugte Reinigungsrichtung R_{R} optional quer zu einer Haupterstreckungsachse A_{HL} des Längsträgers ausgebildet. Optional ist hier ein Adaptermittel 50 vorgesehen, um das Translationsmittel 60 am Längsträger vorzusehen.

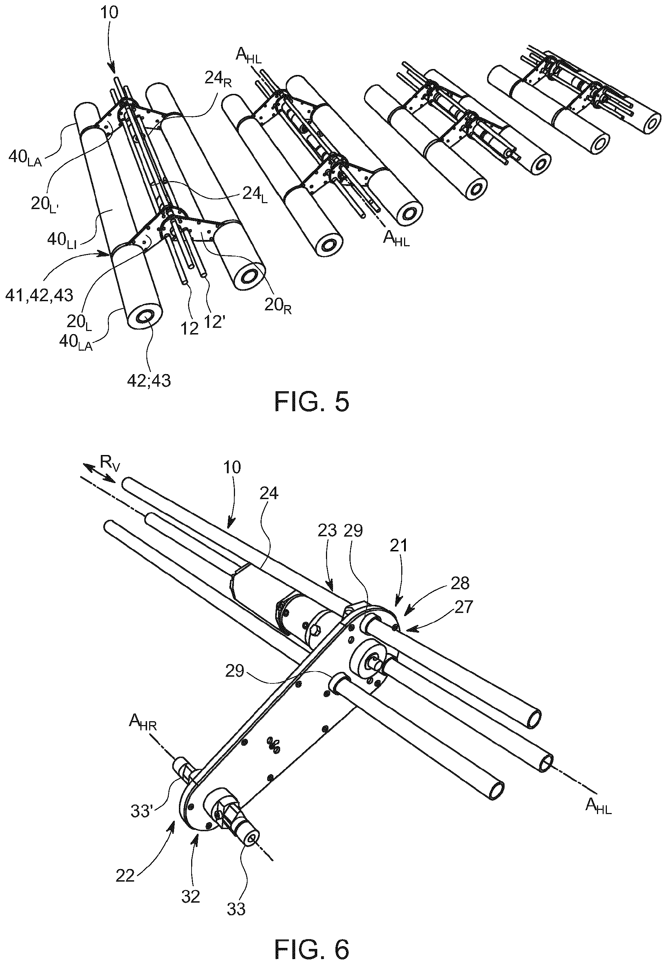

Weiter weist das Reinigungsmodul 2 wenigstens einen, bei dieser Ausführungsform exemplarisch zwei Querträger 20 auf, die mit einem ersten Abschnitt 21 (siehe auch Figs. 6-9) lösbar am Längsträger 10 befestigbar sind, und mit einem zweiten Abschnitt 22 lösbar am Reinigungsmittel 40 befestigbar sind. Optional ist der erste Abschnitt, wie insbesondere in den Figs. 6-9 dargestellt, ein erster Endabschnitt des Querträgers 20 und/oder der zweite Abschnitt 22 ein zweiter Endabschnitt des Querträgers 20. Optional, und dies ist insbesondere in Fig. 1 dargestellt, ist der zweite Abschnitt ein frei auskragender, von der Oberfläche des Solarmoduls beanstandeter Abschnitt des Querträgers 20. Auch dargestellt ist die Option, dass sich das Reinigungsmittel mit einer Haupterstreckungsachse A_{HR} achsparallel zur Haupterstreckungsachse A_{HL} des Längsträgers erstreckt.

Wie in Fig. 2 dargestellt, umfasst das Reinigungsmodul 2 weiter eine Seitenführung 4, die insbesondere eine Reinigung geneigter Solarmodule erlaubt. Sie kann Teil eines Translationsmittels 60 sein. Auch diese Seitenführung 4 ist optional am Längsträger 10 anordbar. Bei dieser Ausführungsform ist die Seitenführung als passive Seitenführung, also ohne eigenen Antrieb ausgeführt.

Weiter in Fig. 1 dargestellt sind Spritzschutzvorrichtungen 6, die ebenfalls an den Längsträgern 10 angeordnet sein können.

Wie exemplarisch in den Figs. 1, 6 und 7 dargestellt, sind die Querträger optional als frei aus dem Längsträger 10 auskragende Kragarme ausgebildet. Jeder Querträger weist bei dieser Ausführungsform keine Tragrollen auf, die ihn gegen das Solarmodul abstützen. Sämtliche Lasten an den am Querträger befestigten Modulen, Mitteln und Elementen etc. werden vom Querträger auf den Längsträger übertragen.

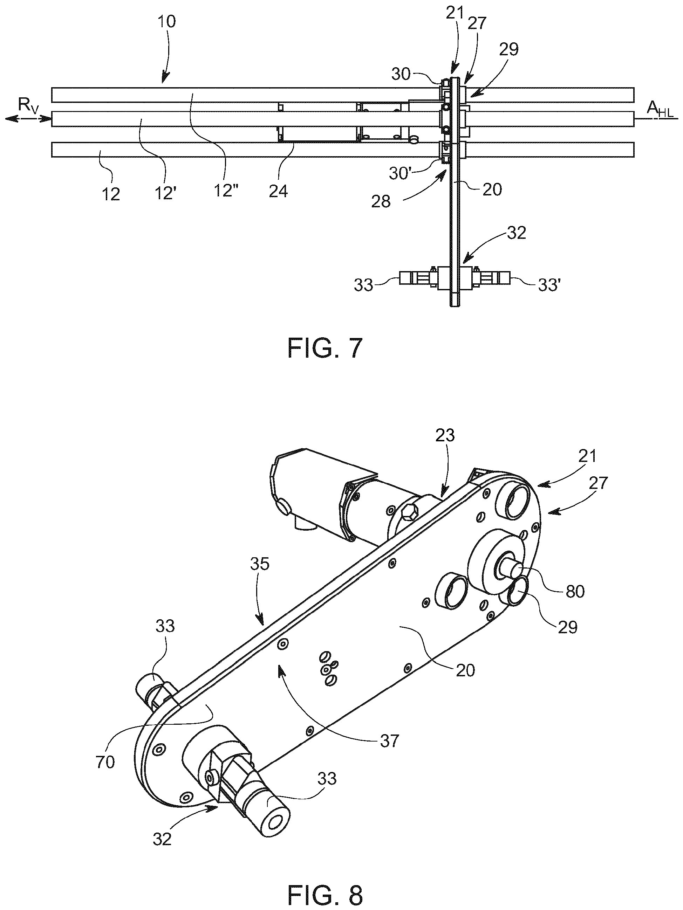

Dazu ist der Querträger bei dieser Ausführungsform biegesteif am Längsträger angeordnet. Der Querträger 20 weist dazu wenigstens eine Längsträgeraufnahme 27 auf, wie sie unter anderem in den Figs. 6-9 dargestellt ist. Diese Längsträgeraufnahme 27 ist derart mit dem Längsträger 10 koppelbar, dass im Kopplungszustand eine Einspannung 28 (siehe Figs. 6 und 7) zwischen dem Querträger 20 und dem Längsträger 10 gebildet wird. Der Querträger ist so biegesteif um die Haupterstreckungsachse A_{HL} des Längsträgers am Längsträger angeordnet. Optional weist der Längsträger 10 eine Mehrzahl an, insbesondere parallel zueinander verlaufender, Trägerrohre 12, und der Querträger 20 eine Mehrzahl dazu korrespondierender Trägerrohraufnahmen 29 derart auf, dass darin die Trägerrohre einführbar sind. Die Längsträgeraufnahme umfasst optional die Trägerrohraufnahmen 29. Insbesondere sind die Trägerrohre unter Bildung einer Einspannung um die Haupterstreckungsachse A_{HL} des Längsträgers 10 zwischen dem Längsträger 10 und dem Querträger 20 einführbar. Eine Einspannung kann hier mittels einer Verschiebearretierung 30 hergestellt werden, die bspw. als Klemmen, Schellen, Madenschrauben etc. ausgeführt sein kann. Die Lagerung des Querträgers ist optional derart ausgebildet, dass dadurch der Längsträger gegen Torsion und/oder Biegung ausgesteift wird. Optional wird zwischen den einzelnen Querträgern und dem Längsträger eine Rahmenaussteifung gebildet.

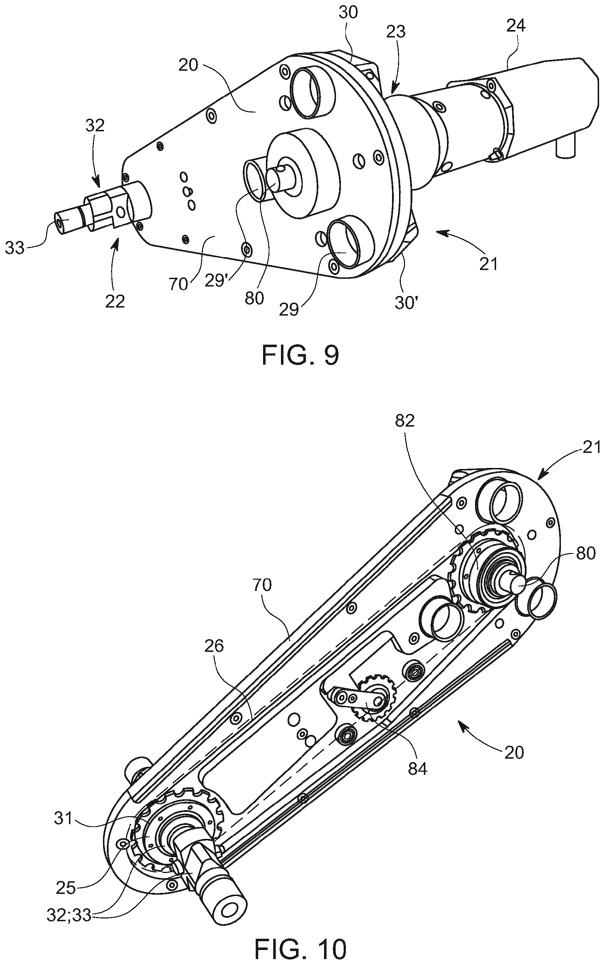

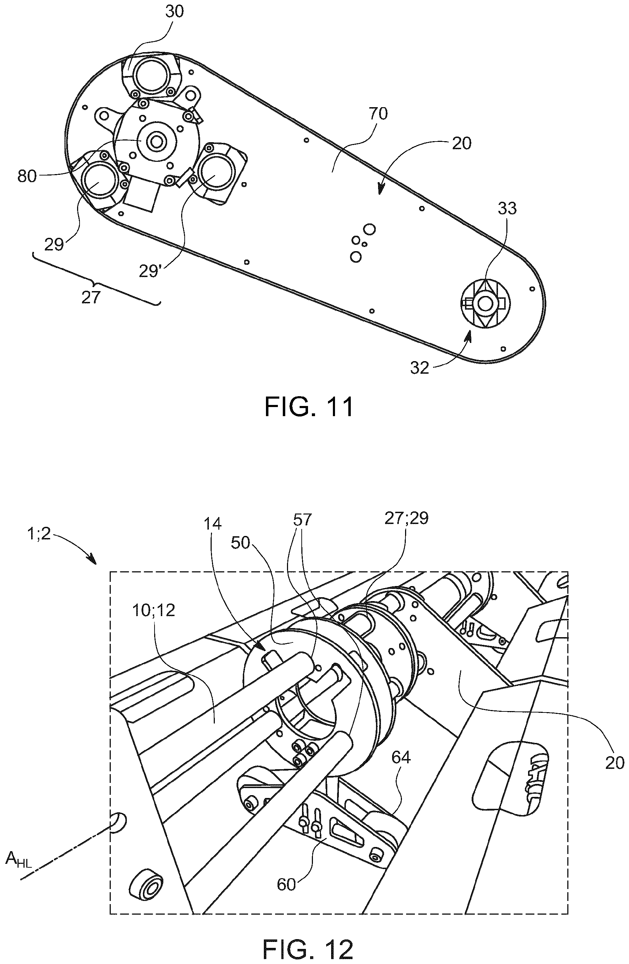

Wie insbesondere in den Figs. 10 und 11 unter Kombination mit den Figs. 1-9 dargestellt, weist der erfindungsgemäße Querträger wenigstens einen Antriebsmittelmontagebereich 23 auf, der im ersten Abschnitt 21 angeordnet ist. Es sei erwähnt, dass dieser erste Abschnitt optional im Bereich der Längsträgeraufnahmen verläuft, es ist aber auch denkbar, dass sich, insbesondere hinsichtlich der Position des Antriebsmittelmontagebereichs 23 der erste Abschnitt sich in Richtung des zweiten Abschnitts erstreckt und insbesondere am zweiten Abschnitt und/oder nahe am zweiten Abschnitt angeordnet ist. An diesem Antriebsmittelmontagebereich 23 kann wenigstens ein Antriebsmittel 24, beispielsweise ein Elektromotor, montiert werden.

Am zweiten Abschnitt 22 ist ein Reinigungsmitteltrieb 25 angeordnet, der mit dem Reinigungsmittel 40 kraftschlüssig gekoppelt oder koppelbar ist. Wie insbesondere in Fig. 10 dargestellt, ist zusätzlich ein Koppeltrieb 26 vorgesehen, beispielsweise ein Kettentrieb, der das Antriebsmittel 24 mit dem Reinigungsmitteltrieb 25 kraftschlüssig verbindet. Über die Kopplung des Reinigungsmitteltriebs 25 und des Reinigungsmittels 40 kann so das Reinigungsmittel 40 mittels des Antriebsmittels 24 angetrieben werden.

Um den Koppeltrieb 26 zu justieren und insbesondere zu spannen, kann optional ein Kopplungstriebspanner 84 vorgesehen sein. Das im ersten Abschnitt 21 am Antriebsmittelmontagebereich 23 montierbare Antriebsmittel 24 weist optional eine Antriebsmittelachse 80 auf, die mit dem Antriebsmittel 24 verbunden ist und mit einem Koppelrad 82, und insbesondere Zahnrad, kraftschließt. Dieses Koppelrad steht mit dem Koppeltrieb 26 in kraftschlüssiger Verbindung. Eine im Wesentlichen identische Ausführungsform findet sich am zweiten Abschnitt 22 und dem Reinigungsmitteltrieb 25. Hier ist ebenfalls ein Achselement 33 vorgesehen, das mit einem Koppelrad 31 kraftschlüssig gekoppelt, das seinerseits mit dem Koppeltrieb 26 in kraftschlüssiger Verbindung steht. Anstelle dieser Ausführungsformen sind sämtliche andere aus dem Stand der Technik bekannten Ausführungsformen zur Übertragung einer Antriebsmittelkraft von einem antriebsseitigen Abschnitt zu einem abtriebsseitigen Abschnitt, bspw. einer Abtriebsachse, hier das Achselement 33, anwendbar. Das Achselement 33 ist optional in einem Reinigungsmittellager 32 gelagert. Selbiges gilt optional für ein Anschlussmittel des Antriebsmittels 24, hier beispielsweise also die Antriebsmittelachse 80.

Bei dieser Ausführungsform ist der Reinigungsmitteltrieb 25 derart ausgeführt, dass er ein Achselement 33 aufweist, das beidseitig aus dem Querträger 20 hervorsteht. Auf diese Weise können links- und rechtsseitig des Querträgers Reinigungsmittel 40 angeordnet werden.

Der Querträger 20 weist bei dieser Ausführungsform ein Gehäuseteil 70 auf, das mit einem weiteren Gehäuseteil (nicht dargestellt) verbunden werden kann, um so insbesondere den Koppeltrieb 26 vor äußeren mechanischen Einflüssen zu schützen. Im inneren des Gehäuses des Querträgers sind vorzugsweise der Koppeltrieb angeordnet. Das Gehäuse trägt optional das Antriebsmittel.

Weiter deutlich erkennbar sind insbesondere in den Figs. 10 und 11 die Längsträgeraufnahmen 27 am ersten Abschnitt 21, die bei dieser Ausführungsform aus drei Trägerrohraufnahmen 29 bestehen. Auch dargestellt ist die Verschiebearretierung 30, die an der Längsträgeraufnahme 27 bzw. den entsprechenden Trägerrohraufnahmen 29 ausgebildet sind. Diese Verschiebearretierung 30 ist hier als Klemme ausgebildet, die kraftschlüssig mit dem Längsträger bzw. den Trägerrohren 12 verbindbar und dort festklemmbar ist. Bei geöffneter Verschiebearretierung kann der Querträger 20 entlang des Längsträgers 10 verschoben bzw. bewegt werden. Auf diese Eigenschaft wird im Folgenden noch im Detail eingegangen.

Wie in den Figs. 6 und 7 dargestellt, ist bei dieser Ausführungsform das Antriebsmittel 24 im Inneren des Längsträgers 10 und insbesondere zwischen den Trägerrohren 12 angeordnet. Der Längsträger kann optional einen Aufnahmefreiraum für das Antriebsmittel aufweisen. Dies erlaubt eine platzsparende Anordnung und darüber hinaus den Schutz des Antriebsmittels 24.

In den Figs. 6 und 7 ist dargestellt, dass der Längsträger optional in einer Verschieberrichtung Rᵥ, die hier koaxial zur Haupterstreckungsachse A_{HL} des Längsträgers 10 verläuft, in die Längsträgeraufnahme 27 einführbar bzw. relativ zu dieser verschiebbar ist. Die relative Verschiebbarkeit bedeutet hier, wie auch schon im einleitenden Teil beschreiben, dass sowohl der Längsträger relativ zum Querträger als auch der Querträger relativ zum Längsträger verschiebbar ist. Es ist also möglich, den Querträger beispielsweise zusammen mit einem Reinigungsmittel am Boden abzulegen und den Längsträger 10 bzw. seine Trägerrohre 12 in den jeweiligen Aufnahmen 27, 29 am ersten Abschnitt des Querträgers 20 einzuführen. Darüber hinaus ist es auch möglich, den Querträger vom Längsträger 10 bzw. seinen Trägerrohren 12 herunterzuziehen und dabei bspw. den Längsträger ortsfest zu fixieren oder aber auch in entgegengesetzter Richtung zu bewegen. Die Verschieberichtung Rv betrifft hier beide Richtungen insbesondere koaxial zu Haupterstreckungsachse A_{HL}, je nachdem, ob das Einführen des Querträgers relativ zu dem Längsträger oder das Herausführen gemeint ist.

Aufgrund dieser Verschiebbarkeit, die vorzugsweise nur bei geöffneter Verschiebearretierung 30 möglich ist, ist eine Positionierung des Querträgers relativ zum Längsträger, und optional an unterschiedlichen Positionen am Längsträger möglich.

Optional ist die Verschiebearretierung derart ausgebildet, dass der Querträger in einem Montagezustand in einer Verschieberichtung Rv entlang der Haupterstreckungsachse A_{HL} relativ zum Längsträger am Längsträger verschiebbar ist, und in einem Betriebszustand gegen ein Verschieben wenigstens in Verschieberichtung Rv festlegbar ist. Auch hier gilt für die Verschieberichtung zuvor Erwähntes.

Insbesondere in diesem Zusammenhang gilt optional, dass der Längsträger 10, insbesondere in seiner Länge, in Richtung der Haupterstreckungsachse A_{HL} variabel ausgebildet, insbesondere zusammensetzbar ausgebildet, und/oder mit einer Mehrzahl an unterschiedlichen Längs(sub)trägern ausgebildet ist, die untereinander zum Erreichen unterschiedlicher Längen austauschbar und/oder miteinander kombinierbar sind. Insbesondere ist denkbar, dass der Längsträger derart ausgebildet ist, dass er insbesondere in seiner Haupterstreckungsachse A_{HL} mit einem weiteren Längsträger koppelbar ist. Eine Kopplung einzelner Längs(sub)träger kann beispielsweise über, optional im Innenbereich des Längsträgers angeordnete Kopplungsmittel erfolgen. Hier können Muffen; Innengewindeverbindungen, Steckverbindungen, Kegelaufnahmen etc. ihre Anwendung finden.

All das was im Umfang dieser Erfindung für den Längsträger gilt, kann optional auch auf die Ausgestaltung seiner einzelnen Längsträger, zumindest auf wenigstens einen davon, übertragen werden, so dass identisches gilt.

Wie im Folgenden noch im Detail erläutert, kann der Längsträger nicht nur aus axial miteinander verbundenen Längsträgerteilen und insbesondere Trägerrohren adaptierbar ausgebildet sein, es ist auch möglich, den Längsträger über Adaptermittel, Umlenkmittel, wie Bleche, Versatzstücke, Verkleidungsblechen, von anderen Bauteilen und Mitteln, bspw. dem Translationsmittel etc., adaptierbar auszubilden, um so insbesondere eine Längenänderung zu erreichen. Auch kann auf diese Weise ganz allgemein eine Kopplung mit anderen Bauteilen und/oder eine Adaption des Längsträgers erreicht werden.

Erreichbar ist über die Verbindung zwischen Querträger und Längsträger optional die Bildung einer Rahmenstruktur in der Anordnung Querträger-Längsträger bzw. Längsträgerrohre, und damit einer Aussteifung des Längsträgers gegen torsion und/oder Biegemomente. Aufgrund der Auskragung der Querträger 20 ist vorzugsweise eine Torsionsaussteifung des Längsträgers vorgesehen. Diese Torsionsaussteifung ist bei der Ausführungsform, wie sie beispielsweise in den Figs. 6 und 7 gezeigt ist, über die Einspannung 28 erreichbar und vorzugsweise über eine Presspassung zwischen dem Längsträger 10 und dem Querträger 20.

Wie in den Figs. 3-5 dargestellt, kann die Reinigungsvorrichtung aus einer Mehrzahl an Reinigungsmodulen 2 zusammengesetzt werden. Auch ist es denkbar, die Reinigungsmodule 2 in unterschiedlichen Längen auszubilden, sodass jeweils ein großer potenziell geforderter Reinigungsbereich für Solarmodule gewährleistet wird.

Wie in den Figs. 4 und 5 im Detail dargestellt, kann ein Reinigungsmodul 2 durch unterschiedlich lange Reinigungsmittel 40 und unterschiedlich lange Längsträger 10 bzw. Trägerrohre 12 in seiner Länge entlang der Haupterstreckungsachse A_{HR} verlängert werden. Es sei erwähnt, dass durch eine Anpassung der Länge der Querträger 20 auch eine Anpassung der Breite und insbesondere eine Anpassung an unterschiedliche Reinigungsmittelabmessungen der Reinigungsmittel 40 erreicht werden kann.

Eine Modulanpassung ist auf unterschiedliche Art und Weise möglich. Dargestellt ist hier beispielsweise eine Anpassung, bei der innere Reinigungsmittel 40 in unterschiedlichen Längen ausgeführt sind. Das in Fig. 4 dargestellte linke Reinigungsmodul 2 weist bei dieser Ausführungsform zwei Reihen von Reinigungsmittel 40_{L} u. 40_{R} auf, die linksseitig und rechtsseitig des Längsträgers 10 angeordnet sind. Eine jede linke und rechte Reihe umfasst dabei wenigstens zwei Querträger 20 und dazwischen wenigstens ein an gegenüberliegenden Innenseiten der Querträger gelagertes inneres Reinigungsmittel 40_{I} bzw., bzw., da es auf der linken Reihe gelagert ist, Reinigungsmittel 40_{LI}. Optional sind bei jeder Reihe wenigstens auf einer Außenseite 37 des Querträgers gelagerte und optional frei auskragende äußere Reinigungsmittel 40_{A} bzw. hier auf der linken Seite 40_{LA} und auf der rechten Seite 40_{RA} vorgesehen. Selbige Anordnung findet sich auf der rechten Seite der dargestellten Module in Fig. 4.

Darüber hinaus ist zu erkennen, dass, in der hier dargestellten Draufsicht auf den Längsträger 10, die linksseitig und rechtsseitig angeordneten Querträger 20_{L}, 20_{R} in hauptaxialer Abfolge entlang der Haupterstreckungsachse A_{HL} zueinander bzw. hintereinander versetzt angeordnet sind. So ist bei jedem der vier dargestellten Module, von unten nach oben entlang der Haupterstreckungsachse A_{HL} betrachtet, ein rechter Querträger 20_{R}, gefolgt von einem linken Querträger 20_{L}, gefolgt von einem rechten Querträger 20'_{R} und einem linken Querträger 20'_{L} angeordnet.

Um die Gesamtabmessung des Reinigungsmoduls 2 symmetrisch zu gestalten, ist optional eine Anpassung der an den Querträgern 20 vorgesehenen Reinigungsmittel 40 vorgenommen worden. So kann beispielsweise das in Zeichnungsebene unten angeordnete Reinigungsmittel 40_{RA} etwas kürzer ausgeführt werden als das linksseitig angeordnete Reinigungsmittel 40_{LA}. Auf beide dieser Reinigungsmittel folgt ein optional gleichlanges inneres Reinigungsmittel 40_{RI} bzw. 40_{LI}, gefolgt von abschließenden, außenseitig an den Querträgern 20 angeordneten äußeren Reinigungsmitteln 40'_{RA} und 40'_{LA}. Diese sind in Ihrer Länge optional wieder unterschiedlich, so das links und rechtsseitig dieselbe Reihenlänge an Reinigungsmitteln entsteht. Hier sind natürlich auch alle anderen Arten von Kombinationen denkbar. Zur Anpassung der Länge der Reinigungsmodule 2, wie sie in Fig. 4 dargestellt sind, können beispielsweise immer dieselben äußeren Reinigungsmittel 40_{A} verwendet werden, während die Länge bzw. die Art der inneren Reinigungsmittel 40_{I} entsprechend nach den Erfordernissen verlängert oder gekürzt werden. Auch können eine Mehrzahl innerer (und/oder äußerer) Reinigungsmittel aneinandergekoppelt werden, um seine Länge anzupassen, wenn dies nötig ist. Natürlich ist es auch denkbar, die Länge der äußeren Reinigungsmittel 40ₐ anzupassen. Darüber hinaus können natürlich weitere Querträger, insbesondere in axialer Folge, angeordnet werden, um ein Modul um weitere Querträger und Reinigungsmittel 40 zu ergänzen. Selbiges gilt für Längsträger. Hier ist die zuvor definierte Adaption der Längsträger anwendbar.

Darüber hinaus ist, wie bereits erwähnt und wie insbesondere in Fig. 3 dargestellt, eine Kopplung der einzelnen Reinigungsmodule 2 möglich, indem beispielsweise die Längsträger 10 miteinander gekoppelt werden, um so die fertigen Module aneinanderzureihen. Eine solche Kopplung kann beispielsweise biegesteif erfolgen, es ist aber auch denkbar, entsprechende Translationsmittel, beispielsweise Stützrollen, vorzusehen und diese optional am Längsträger 10 vorzusehen.

Wie in den Figs. 4 und 5 dargestellt, ist eine Mehrzahl an Reinigungsmittel 40 pro Seite optional kraftschlüssig miteinander gekoppelt, sodass ein Querträger 20 mit einem Antriebsmittel 24 ausgerüstet werden kann, dessen Antriebskraft über den Koppeltrieb 26 (siehe Fig. 10) auf das Reinigungsmittel 40 übertragen werden kann. Bei der beidseitigen Anordnung, wie sie in Figs. 3-5 dargestellt ist, sind so beispielsweise zwei gegeneinander orientierte Antriebsmittel 24 verwendbar, wobei ein Antriebsmittel 24_{L} den linksseitigen Strang an Reinigungsmitteln 40_{L} antreibt und das entgegengesetzt angeordnete Antriebsmittel 24_{R} den rechtsseitigen Strang 40R.

Bei entsprechend stark ausgebildeten Motoren und der Verwendung entsprechender Getriebeanordnungen ist es auch denkbar, ein Antriebsmittel 24 so auszubilden, dass es beide Stränge, linksseitig und rechtsseitig, antreibt und insbesondere mit einer Antriebsmittelachse 80 sowohl kraftschlüssig mit einem Kopplungstrieb am linksseitig auskragenden Querträger 20 als auch an einem rechtsseitig auskragenden Querträger 20 angeordnet ist.

Der Austausch der einzelnen Reinigungsmittel bzw. eine Anpassung der Abmessungen eines Reinigungsmoduls 2 der Reinigungsvorrichtung 1 umfasst optional die folgenden Schritte: Aufsetzen des Reinigungsmittels auf einer Oberfläche, beispielsweise einem Boden, unter Entlastung des damit verbundenen Querträgers 20 bzw. der damit verbundenen Querträger 20; Offnen der Verschiebearretierung 30 wenigstens eines Querträgers 20; Verschieben des wenigstens einen Querträgers relativ zum Längsträger in Verschieberichtung Rv unter Entkopplung des Reinigungsmittels vom Querträger. Hier kann, bereits bekannter Maßen, entweder der Längsträger aus den Längsträgerlagerungen am Querträger herausgezogen werden und/oder der Querträger entlang des Längsträgers verschoben werden. Durch den gewonnenen größeren Abstand zwischen den zwei Längsträgern kann bei dieser Ausführungsform beispielsweise die innen gelagerte Rolle 84 entnommen und durch eine andere Rolle, sei es eine längere oder kürzere, aber auch durch eine Rolle mit einem anderen Reinigungsverhalten, anderen Reinigungsmaterialien, Durchmessern etc. ersetzt werden. Es ich Denkbar an wenigstens einem Reinigungsmittel eine Verschiebarretierung vorzusehen, die optional in ihrer Wirkung identisch zur Verschiebarretierung des Querträger, nur in Bezug auf das Reinigungsmittellager bzw. Reinigungsmittelgegenlager wirkt. Mit dieser Verschiebarretierung kann das Reinigungsmittel optional am Querträger arretiert werden. Insbesondere bei einem frei auskragenden Reinigungsmittel ist das vorteilhaft.

Durch das Verschließen der Verschiebearretierung erfolgt eine Schiebefixierung der Querträger am Längsträger, dass das Reinigungsmodul 2 in den Betriebszustand versetzt.

Optional umfasst die Anpassung auch die Adaption des Längsträgers 10 in seiner Länge derart, so dass eine neue geforderte Länge des Längsträgers 10 zur Herstellung eines in seiner Länge geänderten Reinigungsmoduls erreicht wird. Nach der Adaption des Reinigungsmittels in seiner Länge und/oder dem Austausch dieses Reinigungsmittels gegen ein anderes, entweder in seiner Länge verschiedenes oder anderes Reinigungsmittel, erfolgt das Verschieben des wenigstens einen Querträgers 20 relativ zum Längsträger 10 in entgegengesetzter Verschieberichtung, also unter Verringerung des Abstands der beiden gegenüberliegenden Querträger, unter Kopplung des adaptierten Reinigungsmittels mit dem wenigstens einen Querträger. Vereinfacht gesagt erfolgt der Austausch der hier gestalteten inneren Reinigungsmittel 40_{I} mittels Auseinanderziehen von zwei benachbarten Querträgern, Einsetzen eines geänderten Reinigungsmittels und Zusammenschieben des Querträgers unter Kopplung des Querträgers mit dem neuen Reinigungsmittel.

Der Zusammenbau bzw. die Montage eines Reinigungsmoduls 2 der hierin beschriebenen Art erfolgt mit ähnlichen Schritten. Sie umfassen das Aufsetzen des Reinigungsmittels auf einer Oberfläche, die Kopplung des Reinigungsmittels mit wenigstens einem Querträger 20 am zweiten Abschnitt, das Einführen des Längsträgers in die Längsträgeraufnahme des wenigstens einen Querträgers am zweiten Abschnitt, sodass zwischen Querträger und Längsträger die biegesteife Einspannung gebildet wird, das Schließen der Verschiebearretierung wenigstens eines Querträgers zur Verschiebearretierung des Querträgers am Längsträger.

Die beschriebene Kopplung und Entkopplung des Querträgers 20 mit dem Reinigungsmittel 40 erfolgt optional durch eine dafür geeignete Ausbildung des Reinigungsmittels am Querträger. Der Querträger weist nämlich optional am zweiten Abschnitt 22 wenigstens ein Reinigungsmittellager 32 und das Reinigungsmittel 40 an einem Lagerabschnitt 41 (siehe beispielsweise Fig. 5), wenigstens ein korrespondierendes Reinigungsmittelgegenlager 42 auf oder umgekehrt, sodass in einem Montagezustand das Reinigungsmittel 40 mit dem Querträger 20 und insbesondere dem Reinigungsmitteltrieb 25 koppelbar und/oder entkoppelbar ist und in einem Betriebszustand mit dem Querträger 20 und insbesondere mit dem Reinigungsmitteltrieb 25 unlösbar kraftschlüssig gekoppelt ist.

Optional weist insbesondere in diesem Zusammenhang, und dies ist beispielsweise in den Figs. 6-10 dargestellt, das Reinigungsmittellager 32 wenigstens ein Achselement 33 und das Reinigungsmittelgegenlager 42 (siehe Fig. 5) wenigstens eine Achselementaufnahme 43 auf oder umgekehrt, wobei das Achselement 33 in die Achselementaufnahme 43 einführbar ist, um das Reinigungsmittel 40 mit dem Querträger 20 kraftschlüssig zu koppeln, und aus dieser herausführbar ist, um das Reinigungsmittel 40 vom Querträger 20 zu entkoppeln. Beispielsweise kann in einer Verschieberichtung Rv entlang der Haupterstreckungsachse A_{HL} des Längsträgers das Achselement 33 in die Achselementaufnahme 43 einführbar und/oder aus dieser herausführbar sein.

Eine kraftschlüssige Kopplung zwischen Querträger und Reinigungsmittel ist vorzugsweise in einer Richtung abweichend von einer Rotationsrichtung um die Haupterstreckungsachse bzw. die Haupterstreckungsachse des Reinigungsmittels bzw. eines Rotationsmittels des Reinigungsmittels vorgesehen. Optional ist so eine kraftschlüssige Kopplung zur Lagerung, optional in horizontaler und vertikaler Richtung des Reinigungsmittels relative zum Querträger und/oder relativ zur Schwerkraftrichtung vorgesehen. Eine weitere kraftschlüssige Kopplung ist optional zwischen einem solchen Achselement und dem Reinigungsmitteltrieb und über den Kopplungstrieb 26 mit dem Antriebsmittel 24 vorgesehen, sodass das Antriebsmittel 24 das Achselement 33 antreibt. Eine rotatorisch freie Lagerung ist optional über das Reinigungsmittellager 32 am Querträger 20 vorgesehen. Ein solches Reinigungsmittellager 32 kann beispielsweise ein Walzen- oder Kugellager sein. Neben Achselement und Achselementaufnahmen sind natürlich jede andere Art von Lagerungen des Reinigungsmittels an einem Querträger denkbar und insbesondere eine Lagerungsart, bei der das Reinigungsmittel rotierbar am Querträger anordbar ist.

Ein Querträger, bei dem ein Antriebsmittel über einen Koppeltrieb 26 einen Reinigungsmitteltrieb 25 antreibt, der seinerseits mit dem Reinigungsmittel 40 gekoppelt werden kann, wird im Umfang der Erfindung als aktiver Querträger bezeichnet.

Es ist auch denkbar, einen oder mehrere passive Querträger vorzusehen, die optional nur der (passiven) Lagerung der Reinigungsmittel 40 dienen. Solche passiven Querträger 20 sind optional in nahezu allen hier dargestellten Ausführungsformen vorgesehen. Bei den in den Figs. 3-5 dargestellten Reinigungsmodulen 2 sind diese passiven Querträger 20 diejenigen Querträger 20, an denen kein Antriebsmittel 24 angeordnet ist. Bei solchen Querträgern ist optional lediglich ein Reinigungsmittellager 32 vorgesehen, das mit wenigstens einem Reinigungsmittel 40 koppelbar ist. Dieses wenigstens eine (passive) Reinigungsmittel 40 ist dann optional mit wenigstens einem aktiv angetriebenen Reinigungsmittel 40 koppelbar. Eine Kopplung kann hier beispielsweise wieder über ein Achselement oder eine entsprechend ausgebildete Achselementaufnahme erreicht werden. Zudem sind natürlich auch andere kraftschlüssige und insbesondere rotatorisch kraftschlüssige Verbindungen anwendbar.

Optional ist die Kopplung zwischen Reinigungsmittel und Querträger derart ausgebildet, dass die Arretierung bzw. Verschiebsicherung des Achselements in der Achselementaufnahme bzw. der Reinigungsmittellager und -Gegenlager aufgrund der Arretierung des Querträgers am Längsträger erfolgt. Sobald der Längsträger relativ zum Querträger bewegt wird und insbesondere vom Reinigungsmittellager 32 weg oder auf diesen zubewegt wird, gleitet optional das Reinigungsmittellager aus dem Gegenlager aus bzw. in dieses ein bzw. das Achselement aus der Achselementaufnahme aus bzw. in diese ein, sodass das Reinigungsmittel freigegeben bzw. gekoppelt wird. Wie erwähnt, ist es ist insbesondere bei einer solchen Ausführungsform denkbar, eine Verschiebearretierung zwischen Reinigungsmittel und Reinigungsmittellager 32 und insbesondere Achselement 33 vorzusehen.

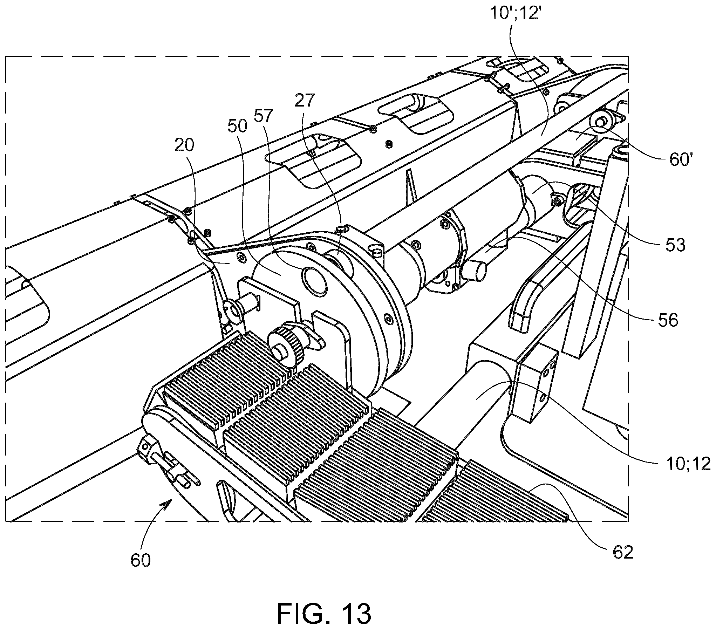

Mit den Figs. 12 und 13 sind unterschiedliche Ausführungsformen von Translationsmitteln 60 vorgesehen, die mit den jeweiligen Reinigungsmodulen 2 bzw. der Reinigungsvorrichtung 1 verbunden werden können. Fig. 12 zeigt eine passive Translationsvorrichtung 60, umfassend eine Mehrzahl an passiven Rollen 64. Bei einer Bewegung des Reinigungsmoduls 2 tragen diese Rollen zur Vertikalabstützung des Reinigungsmoduls 2 und insbesondere seines Längsträgers bei. Darüber hinaus erfolgt durch die Auskragung der Rollen 64 eine Kippaussteifung um die Haupterstreckungsachse A_{HL} des Längsträgers 10.

In Fig. 13 ist das Translationsmittel 60 ein aktiv angetriebenes Translationsmittel und insbesondere ein Raupenantrieb, umfassend eine Laufkette bzw. einen Laufriemen 62. Das aktive Translationsmittel 60 verfügt hier über einen Translationsantrieb 56, zum Antrieb der Laufkette etc., um so das Verfahren des Reinigungsmoduls 2 bzw. der Reinigungsvorrichtung 1 zu ermöglichen. Dazu ist der Translationsantrieb 56 an einem Translationsantriebsmontagebereich 53 festgelegt.

Die Laufkette umfasst vorzugsweise einen als Profilriemen ausgebildeten Endlosriemen, mit einem Außenseitig angeordneten Profil, und einer innenseitig angeordnetes Dämpfungsschicht. Das Profil weist optional longitudinal und quer verlaufende Rillen auf.

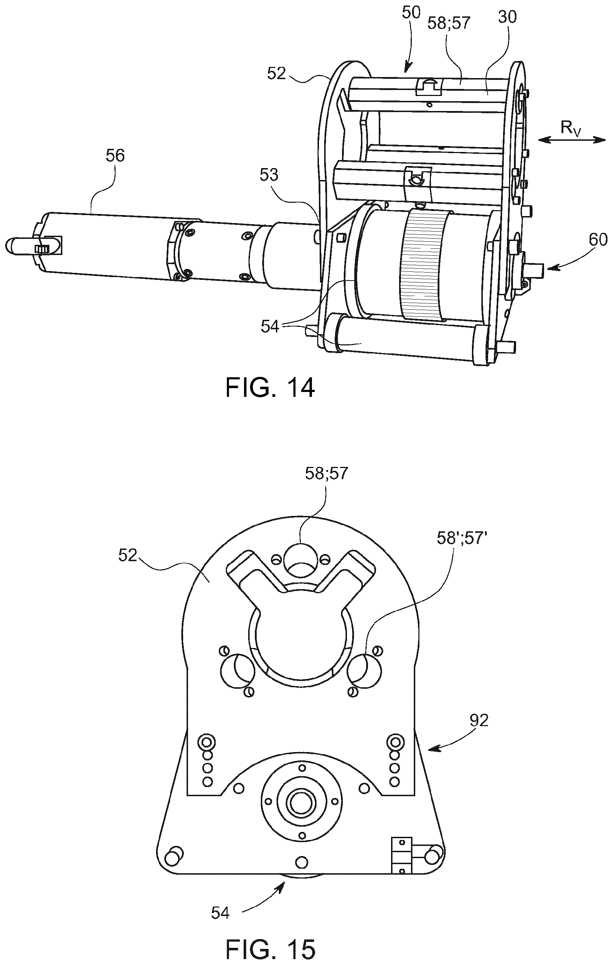

Eine Fixierung des jeweiligen Translationsmittels 60 am Reinigungsmodul 2 erfolgt insbesondere bei den in den Figs. 12 und 13 dargestellten Ausführungsformen über Adaptermittel 50, wie sie im Detail in den Figs. 14 und 15 dargestellt sind. Die Adaptermittel umfassen optional eine Adapter-Längsträgeraufnahme 57, die mit dem Längsträger 10 koppelbar ist, wobei optional das Adaptermittel in einer Verschieberichtung Rv, insbesondere achsparallel zur Haupterstreckungsachse A_{HL} des Längsträgers 10 relativ zum Längsträger verschiebbar und insbesondere auf den Längsträger aufsteckbar ist. In seiner Ausführung und seinem Anwendungsbereich entspricht die Adapter-Längsträgeraufnahme 57 optional der Ausführungsform der Längsträgeraufnahme 27 des Querträgers. In diesem Zusammenhang gilt optional alles, was zuvor in Bezug auf den Querträger und seine Aufnahme erwähnt wurde, optional auch umgekehrt. So ist bspw. die Adapter-Längsträgeraufnahme des Adaptermittels mit der Längsträgeraufnahme des Querträgers identisch und/oder entlang der Haupterstreckungsachse A_{HL} des Längsträgers 10 fluchtend ausrichtbar ausgebildet, sodass der Längsträger 10 mit einem Durchführabschnitt 14 (siehe Fig. 12) sowohl in die Längsträgeraufnahme 27 des Querträgers als auch die Adapter-Längsträgeraufnahme 57 des Adaptermittels 50 einführbar ist. Dieser Durchführabschnitt 14 kann sowohl einen Teilbereich als auch den gesamten oder im Wesentlichen den gesamten Längsträger umfassen.

Bei einer besonderen Ausführungsform, wie sie beispielsweise in Fig. 14 dargestellt ist, kann das Adaptermittel 50 aus einer Mehrzahl an Tragelementen und insbesondere Scheiben 52 bestehen, die über Streifelemente, hier Hülsen 58, miteinander verbunden und insbesondere relativ zueinander ausgesteift sind. Als Hülsen können hier auch entsprechend ausgebildete Verschiebearretierung 30 vorgesehen werden, die beispielsweise ein Festklemmen des Adaptermittels 50 auf dem durchgeführten Längsträger 10 bzw. den Trägerrohren 12 erlaubt.

Das in den Figs. 14 und 15 dargestellte Translationsmittel 60 ist ein aktives Translationsmittel, bei dem über einen aktiven Antriebsbereich, insbesondere einen Laufkettentrieb, eine Laufkette (nicht dargestellt) angetrieben werden kann. Dazu ist wieder ein Translationsantrieb 56 mit dem Translationsmittel 60 an einem Translationsantriebmontageberich 53 gekoppelt. Dieser befindet sich hier am Adaptermittel 50.

In Fig. 15 dargestellt, ist auch eine Höhenanpassung 92, mit der optional eine Höhenanpassung des Längsträgers relativ zur Solarmoduloberfläche erreichbar ist.

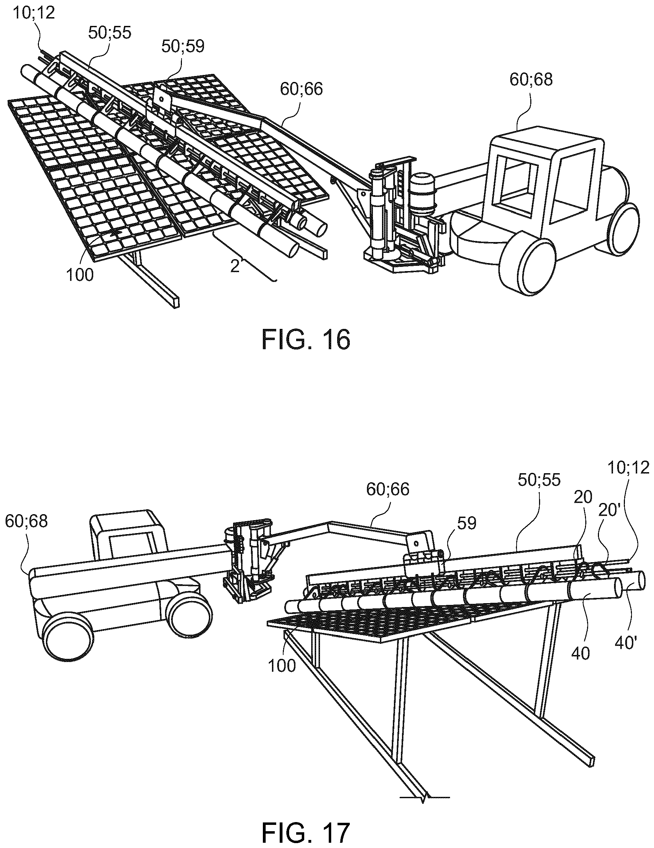

In den Figs. 16 und 17 ist eine weitere Ausführungsform des Reinigungsmoduls bzw. der Reinigungsvorrichtung 1 dargestellt. Bei dieser Ausführungsform ist das Translationsmittel 60 ein Hydraulikarm, der eine Translation der Reinigungsvorrichtung 1 relativ zum Solarmodul 100 erlaubt. Dieser Hydraulikarm 66 kann beispielsweise an einem Fahrzeug 68 befestigt sein. Das Translationsmittel 60 weist bei dieser Ausführungsform wieder ein Adaptermittel 50 auf, das hier in Form eines Tragbalkens 55 mit komplementär dazu ausgebildetem Greifmittel 59 ausgebildet ist. Über dieses Greifmittel ist eine Verbindung zwischen Tragbalken und Hydraulikarm 66 möglich. Über entsprechende Achselemente 51 des Adaptermittels 50, die im Wesentlichen entsprechend den in Fig. 5 dargestellten Achselementen 50, allerdings natürlich ohne aktivem Translationsmittel 60, ausgebildet sind, kann der Tragbalken 55 am Längsträger 10 der Reinigungsvorrichtung 1 befestigt werden. Die Reinigungsvorrichtung 1 weist zur Reinigung wieder Reinigungsmittel 40 auf, wie sie zuvor beschrieben wurden. Zusammengesetzt ist, wie in Fig. 16 dargestellt, die Reinigungsvorrichtung 1 wieder aus einer Mehrzahl an Reinigungsmodulen 2, bei denen innenseitige und außenseitige Reinigungsmittel 40 an Querträgern 20 angeordnet sind. Wieder ist eine links- und rechtsseitige Anordnung relativ zum Längsträger 10 bzw. Trägerrohren 12 denkbar.

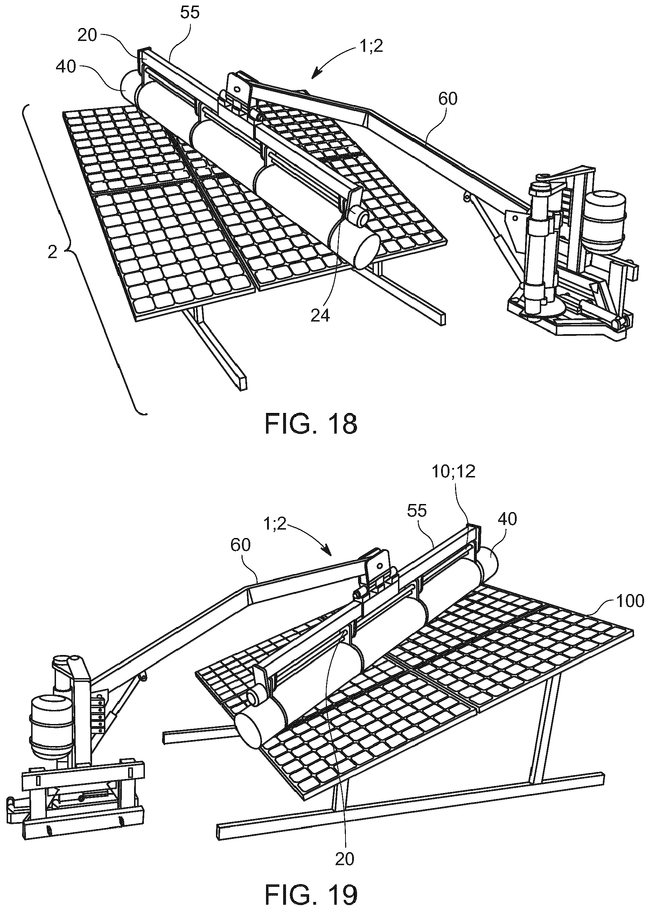

Eine entsprechende Ausführungsform zeigen die Figs. 18-20, wobei hier lediglich eine Reihe an Reinigungsmitteln 40 bzw. Querträgern 20 vorgesehen ist. Ansonsten entspricht die Ausführung im Wesentlichen der Ausführungsform gemäß den Figs. 16 und 17, wobei auch hier insbesondere wieder eine biegesteife Lagerung der Querträger 20 am Längsträger 10 denkbar ist.

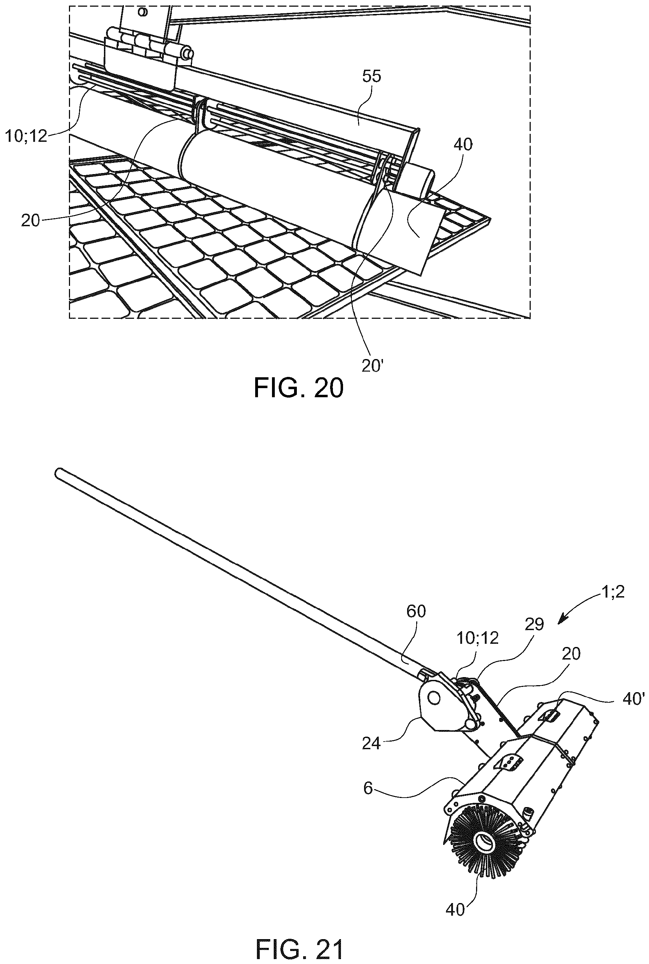

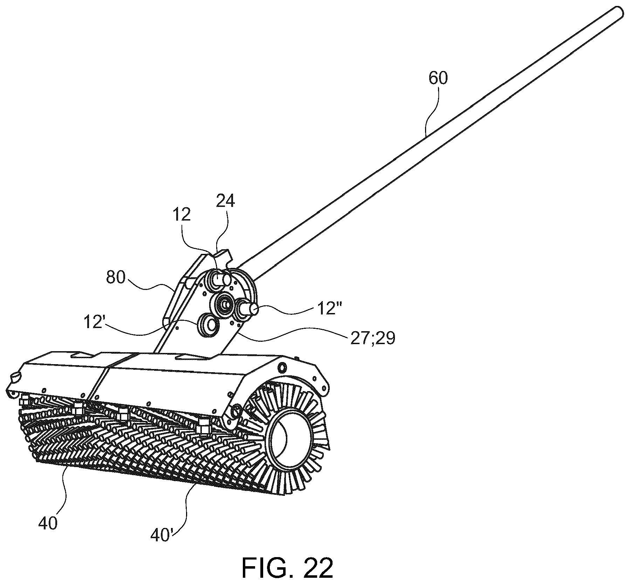

Eine weitere Ausführungsform zeigen die Figs. 21-22, wobei die Reinigungsvorrichtung bzw. ein Reinigungsmodul 2 hier im Wesentlichen als "Handbürste" ausgeführt ist. Vorgesehen ist ein Querträger 20 in Form eines Kragarms, an dem ein Antriebsmittel 24 über einen Längsträger 10 befestigt ist. Auch hier kann der Längsträger 10 die zuvor beschriebenen Trägerrohre 12 aufweisen, die in entsprechende Trägerrohraufnahmen 29 am Längsträger 10 eingeführt sind. Das Translationsmittel 60 ist hier ein Schub griff, der durch einen Benutzer bedient werden kann und so eine Translation der Reinigungsvorrichtung 1 erlaubt. Am Querträger 20 und insbesondere wieder an einem zweiten Abschnitt 22 ist ein Reinigungsmittel 40 vorgesehen, das hier aus zwei links- und rechtsseitig vom Querträger 20 auskragenden Bürsten besteht. Weiter ist eine Spritzschutzvorrichtung 6 vorgesehen.

Das Reinigungsmodul kann grundsätzlich optional über wenigstens ein Reinigungsmittel über die zu reinigende Oberfläche bewegt (hier dient das Reinigungsmittel optional als aktives Translationsmittel) und/oder auf dieser abgestützt werden (hier dient das Reinigungsmittel optional als passives Translationsmittel und insbesondere als Abstützung).

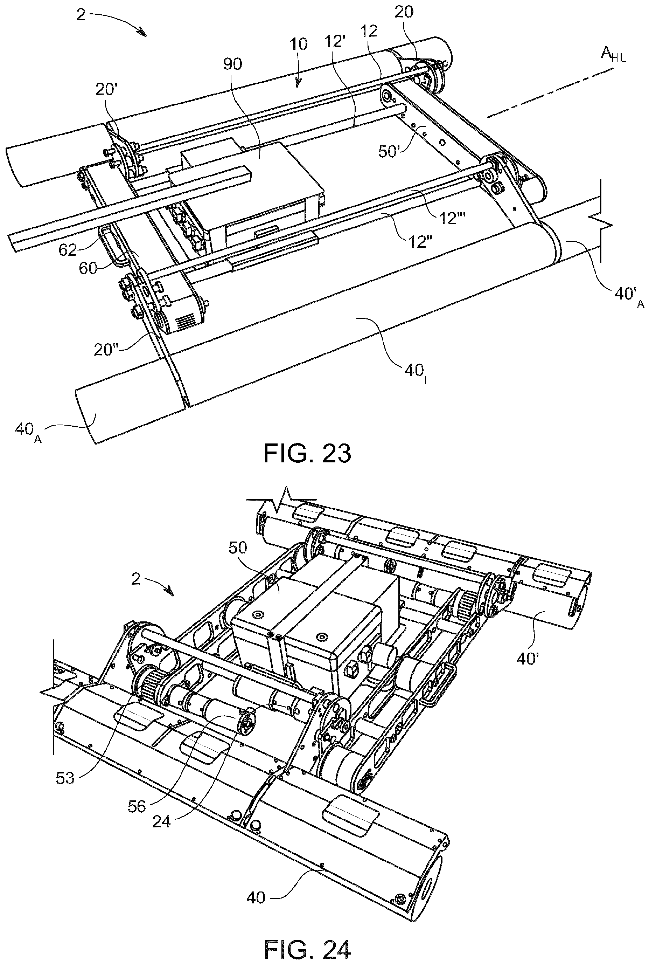

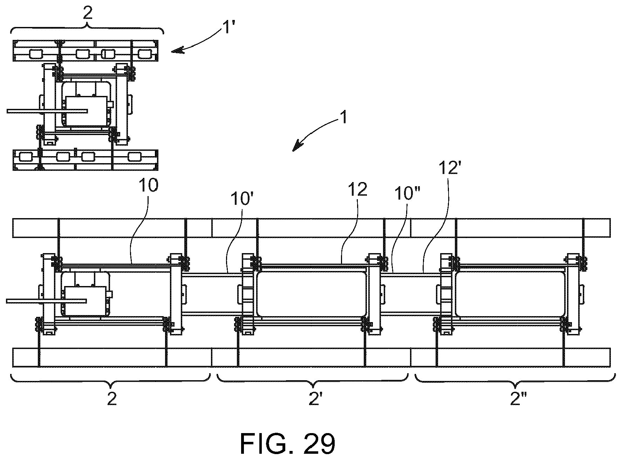

Die Figs. 23-29 zeigen eine weitere Ausführungsform der erfindungsgemäßen Reinigungsvorrichtung bzw. des erfindungsgemäßen Reinigungsmoduls 2. Der Längsträger 10 besteht hier wieder aus einer Mehrzahl an Trägerrohren 12, die jedoch, im Vergleich zu der vorhergehenden Ausführungsform, in einem größeren Abstand zueinander angeordnet sind. Trotzdem trägt der Längsträger 10 über (optional einen Teil seiner gesamten Anzahl) Trägerrohre 12 Querträger 20, an denen wieder Reinigungsmittel 40 angeordnet sind. Wie auch schon zuvor, sind in einer Draufsicht auf den Längsträger 10 betrachtet, links- und rechtsseitige Reihen von Reinigungsmitteln vorgesehen, die über entsprechend an einem Querträger 20 pro Reihe angeordnetes Antriebsmittel 24 (siehe Figs. 24-26) angetrieben sind.

Als Antrieb des Reinigungsmoduls 2 dient hier ein Translationsmittel 60 in Form eines Raupenantriebs, wieder umfassend wenigstens eine Laufkette 62. Der Anschluss des Translationsmittels 60 erfolgt wieder über Adaptermittel 50, die hier teilweise entsprechend den in den Ausführungsformen gemäß Figs. 21 und 22 bzw. 14 und 15 verwendeten Adaptermitteln entsprechen. Zusätzlich sind jedoch weitere Adaptermittel (hier dargestellt als 50') vorgesehen, die biegesteif mit Teilen des Längsträgers 10, hier Trägerrohren (dargestellt hier als 12') (siehe Fig. 23) verbunden sind. Auch bei dieser Ausführungsform gilt also, dass über Adaptermittel 50, 50' die Translationsmittel 60 am Längsträger angeordnet sind.

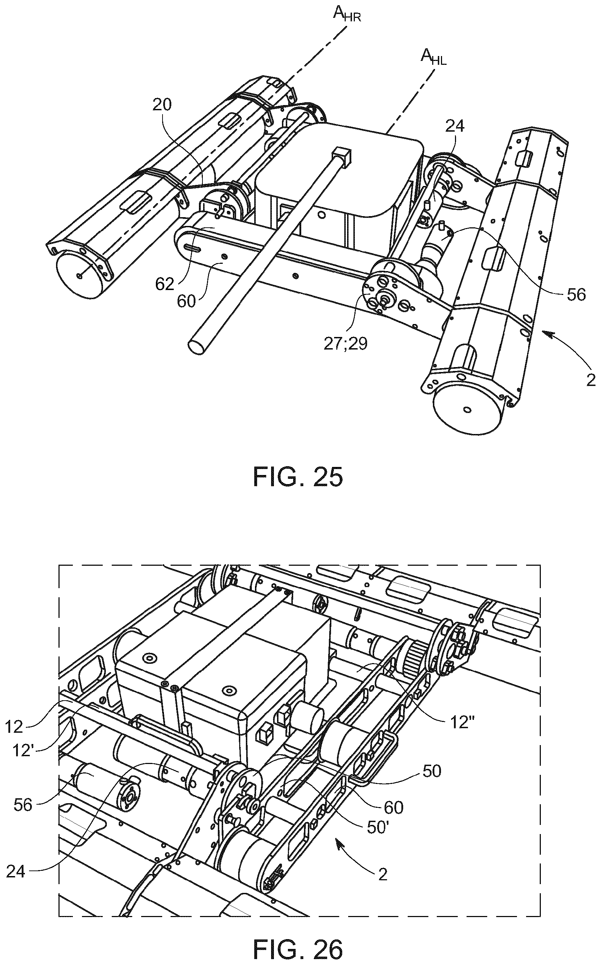

Wie auch schon bei der zu Anfang beschriebenen Ausführungsform, ist ein Antrieb der Translationsmittel 60 über einen Translationsantrieb 56 möglich, der an einem Translationsantriebsmontagebereich 53 am Translationsmittel 60 montiert ist. Eine Darstellung ohne die Laufkette 62, findet sich in den Figs. 24 und 26.

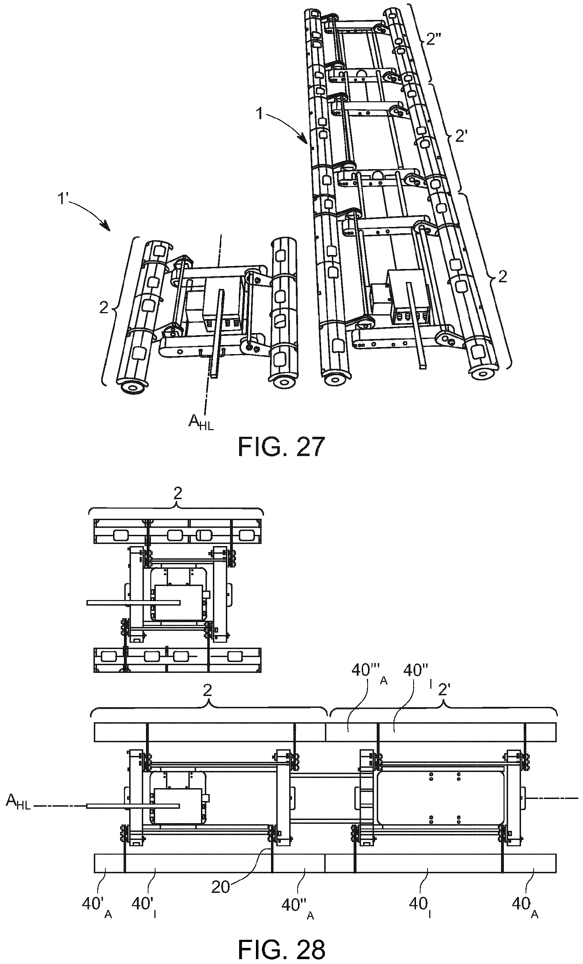

Die unterschiedliche Anordnung des in den Figs. 23-26 dargestellten Reinigungsmoduls 2 zur Bildung einer verlängerten Reinigungsvorrichtung 1 findet sich in den Figs. 27-29, wobei hier eine Kopplung der einzelnen Reinigungsmodule 2 wieder über Längsträger 10 erfolgt, die optional in Form von Trägerrohren 12 die einzelnen Reinigungsmodule 2, insbesondere biegesteif miteinander verbinden.

Insbesondere in Bezug auf diese Verbindung bezogen auf die Ansteuerung der einzelnen Translationsmittel 60 sei erwähnt, dass optional alle Translationsmittel 60 relativ zueinander im Gleichlauf betrieben werden. Eine Führung relativ zum Solarmodul erfolgt optional durch eine Zwängung, beispielsweise durch die zuvor erwähnte Seitenführung 4 (siehe Fig. 2). Optional ist keine unterschiedliche Ansteuerung der Translationsmittel relativ zueinander vorgesehen.

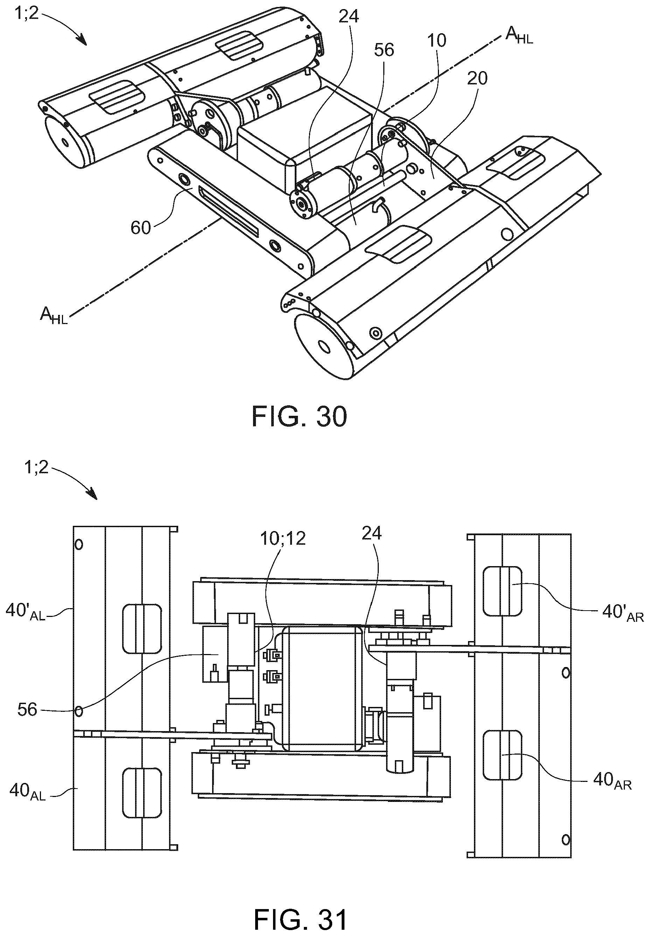

Die Figs. 30 und 31 zeigen eine weitere Ausführungsform des erfindungsgemäßen Reinigungsmoduls 2 in einer sehr kompakten Ausführung. Bei dieser Reinigungsvorrichtung 1 sind wieder jeweils links- und rechtsseitig des Längsträgers 10 und seiner Haupterstreckungsachse A_{HL} Reinigungsmittel 40 vorgesehen, die jeweils aus rechts- und linksseitig bzw. außenseitig aus den Querträgern 20 frei auskragenden einzelnen Reinigungsmittel 40ₐₗ bzw. 40ₐᵣ ausgebildet sind. Ansonsten gilt alles zuvor Genannte auch für das hier dargestellte Reinigungsmodul 2 bzw. die Reinigungsvorrichtung 1.

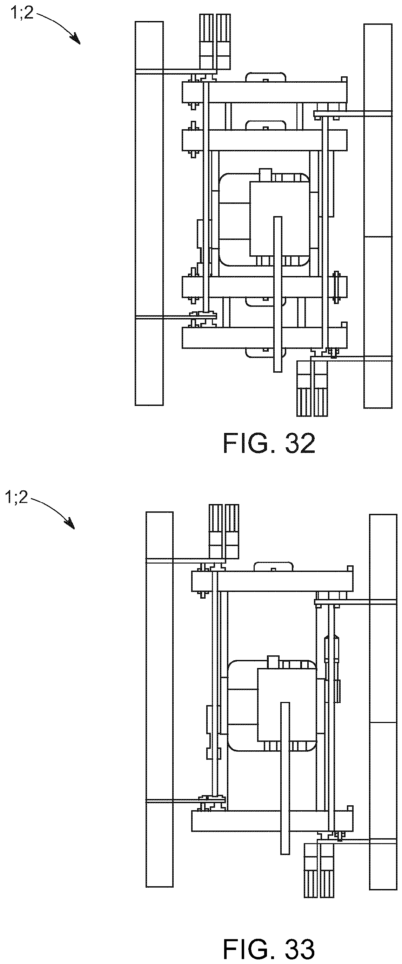

Die Figs. 32 und 33 zeigen weitere mögliche Ausführungsformen des Reinigungsmoduls 2 bzw. der Reinigungsvorrichtung 1.

Wie in Fig. 21 dargestellt, ist optional eine Elektronikeinheit vorgesehen, die hier in einem Gehäuse untergebracht und am Längsträger 10 befestigt ist. Optional ist sie an Trägerrohren 12 befestigt und weiter optional am Längsträger 10 eingehängt bzw. lösbar angeordnet. Auf diese Weise kann eine Elektronikeinheit, beispielsweise umfassend eine Steuerung, Antriebselektronik etc., modular an unterschiedlichen Modulen 2 verwendet werden.

### Bezugszeichen

- 1: Reinigungsvorrichtung
- 2: Reinigungsmodul
- 4: Seitenführung
- 6: Spritzschutzvorrichtung
- 10: Längsträger
- 12: Trägerrohr
- 14: Durchführabschnitt
- 20: Querträger
- 20₁: linksseitiger Querträger
- 20ᵣ: rechtsseitiger Querträger
- 21: erster Abschnitt
- 22: zweiter Abschnitt
- 23: Antriebsmittelmontagebereich
- 24: Antriebsmittel
- 24_{L}: linksseitiges Antriebsmittel
- 24_{R}: rechtsseitiges Antriebsmittel
- 25: Reinigungsmitteltrieb
- 26: Koppeltrieb
- 27: Längsträgeraufnahme
- 28: Einspannung
- 29: Trägerrohraufnahme
- 30: Verschiebearretierung
- 31: Koppelrad
- 32: Reinigungsmittellager
- 33: Achselement
- 34: Achselementaufnahme
- 35: Innenseite Querträger
- 37: Außenseite Querträger
- 40: Reinigungsmittel
- 40_{LI}: linksseitiges inneres Reinigungsmittel
- 40_{LA}: linksseitiges äußeres Reinigungsmittel
- 40_{RI}: rechtsseitiges inneres Reinigungsmittel
- 40_{RA}: rechtsseitiges äußeres Reinigungsmittel
- 41: Lagerabschnitt
- 42: Reinigungsmittelgegenlager
- 43: Achselementaufnahme
- 50: Adaptermittel
- 51: Achselement
- 52: Tragelement, Scheibe
- 53: Translationsantriebsmontagebereich
- 55: Tragbalken
- 56: Translationsantrieb
- 57: Adapter-Längsträgeraufnahme
- 58: Hülse
- 59: Greifmittel
- 60: Translationsmittel
- 62: Laufkette
- 64: Rolle
- 66: Hydraulikarm
- 68: Fahrzeug
- 70: Gehäuseteil
- 80: Antriebsmittelachse
- 82: Zahnrad bzw. Koppelrad
- 84: Kopplungstriebspanner
- 90: Elektronikeinheit
- 92: Höhenanpassung
- 100: Solarmodul
- A_{HL}: Haupterstreckungsachse
- A_{HR}: Kragachse
- Rv: Verschieberichtung
- R_{R}: Reinigungsrichtung

## Patentansprüche

1. Modulare Reinigungsvorrichtung (1) zum Reinigen der Oberfläche eines Solarmoduls (100), umfassend
wenigstens ein Reinigungsmodul (2) mit
wenigstens einem Längsträger (10), wenigstens einem Querträger (20), und
wenigstens einem Reinigungsmittel (40), beispielsweise wenigstens einer rotierbarer Bürste, wobei am Längsträger (10) wenigstens ein Translationsmittel (60), beispielsweise ein Kettenfahrwerk oder ein Hydraulikarm, befestigt oder befestigbar ist, über das die Reinigungsvorrichtung (1) relativ zur Oberfläche des Solarmoduls (100) bewegbar ist, wobei
der Querträger (20) mit einem ersten Abschnitt (21) lösbar am Längsträger (10) befestigbar ist, und
mit einem zweiten Abschnitt (22) lösbar am Reinigungsmittel (40) befestigbar ist, und wobei
der Querträger (20) weiter umfasst:
wenigstens einen Antriebsmittelmontagebereich (23), der im ersten Abschnitt (21) angeordnet ist, und an dem wenigstens ein Antriebsmittel (24), beispielsweise ein Elektromotor, montiert oder montierbar ist,
wenigstens einen Reinigungsmitteltrieb (25), der im zweiten Abschnitt (22) angeordnet ist, und mit dem Reinigungsmittel (40) kraftschlüssig gekoppelt oder koppelbar ist, und
wenigstens einen Koppeltrieb (26), beispielswiese einen Kettentrieb, ausgebildet, um das Antriebsmittel (24) kraftschlüssig mit dem Reinigungsmitteltrieb (25) zu koppeln, um so das Reinigungsmittel (40) anzutreiben.

2. Reinigungsvorrichtung nach Anspruch 1,
**dadurch gekennzeichnet, dass**
der Querträger (20), im am Längsträger (10) befestigten Zustand, als frei aus dem Längsträger (10) auskragender Kragarm ausgebildet ist.

3. Reinigungsvorrichtung nach einem der Ansprüche 1 oder 2,
**dadurch gekennzeichnet, dass**
der Querträger (20) eine Längsträgeraufnahme (27) umfasst, die derart mit dem Längsträger (10) koppelbar ist, dass im Kopplungszustand eine Einspannung (28) zwischen Querträger (20) und Längsträger (10) gebildet wird, so dass der Querträger (20) um die Haupterstreckungsachse A_{HL} des Längsträger (10) biegesteif am Längsträger (10) angeordnet ist.

4. Reinigungsvorrichtung nach einem der vorhergehenden Ansprüche, insbesondere Anspruch 3,
**dadurch gekennzeichnet, dass**
der Längsträger (10) in einer Verschieberichtung Rv, insbesondere achsparallel zu seiner Haupterstreckungsachse A_{HL}, in die Längsträgeraufnahme (27) einführbar ist, insbesondere unter Bildung einer Einspannung zwischen Längsträger (10) und Querträger (20), um die Haupterstreckungsachse A_{HL} des Längsträgers (10).

5. Reinigungsvorrichtung nach einem der vorhergehenden Ansprüche,
**dadurch gekennzeichnet, dass**
der Querträger (20) lösbar und an unterschiedlichen Positionen am Längsträger (10) befestigbar ist.

6. Reinigungsvorrichtung nach einem der vorhergehenden Ansprüche,
**dadurch gekennzeichnet, dass**
der Längsträger (10) insbesondere in seiner Länge in Richtung der Haupterstreckungsachse A_{HL} variable ausgebildet, insbesondere zusammensetzbar ausgebildet ist und/oder aus einer Mehrzahl an unterschiedlichen Längsträgerteilen ausgebildet ist, die untereinander zum Erreichen unterschiedlicher Längen austauchbar und/oder miteinander kombinierbar sind.

7. Reinigungsvorrichtung nach einem der vorhergehenden Ansprüche,
**dadurch gekennzeichnet, dass**
der Längsträger (10) eine Mehrzahl an, insbesondere parallel zueinander verlaufender Trägerrohre (12), und der Querträger (20) eine Mehrzahl dazu korrespondierender Trägerrohraufnahmen (29) derart umfasst, dass darin die korrespondierenden Trägerrohre einführbar sind, insbesondere unter Bildung einer Einspannung um die Haupterstreckungsachse A_{HL} des Längsträgers (10) zwischen Längsträger (10) und Querträger (20).

8. Reinigungsvorrichtung nach einem der vorhergehenden Ansprüche,
**dadurch gekennzeichnet, dass**
wenigstens ein Querträger (20), eine öffenbare und arretierbare Verschiebarretierung (30) derart aufweist, dass er in einem Montagezustand, in einer Verschiebrichtung Rv entlang der Haupterstreckungsachse A_{HL} relativ zum Längsträger (10) am Längsträger (10) verschiebbar ist, und in einem Betriebszustand gegen ein Verschieben wenigstens in Verschiebrichtung Rvfestlegbar ist.

9. Reinigungsvorrichtung nach einem der vorhergehenden Ansprüche,
**dadurch gekennzeichnet, dass**
der Querträger (20) am zweiten Abschnitt (22) wenigstens ein Reinigungsmittellager (32), und
das Reinigungsmittel (40) an einem Lagerabschnitt (41) wenigstens ein korrespondierendes Reinigungsmittelgegenlager (42), oder umgekehrt, aufweisen,
so dass in einem Montagezustand das Reinigungsmittel (40) mit dem Querträger (20) und insbesondere dem Reinigungsmitteltrieb (25) koppelbar und/oder endkoppelbar ist, und in einem Betriebszustand mit dem Querträger (20) und insbesondere mit dem Reinigungsmitteltrieb (25) unlösbar kraftschlüssig gekoppelt ist.

10. Reinigungsvorrichtung nach einem der vorhergehenden Ansprüche,
**dadurch gekennzeichnet, dass**
das Reinigungsmittellager (32) wenigstens ein Achselement (33), und das Reinigungsmittelgegenlager wenigstens eine Achselementaufnahme (34) aufweisen, oder umgekehrt, wobei
das Achselement (33) in die Achselementaufnahme (34) einführbar ist, um
das Reinigungsmittel (40) mit dem Querträger (20) kraftschlüssig zu koppeln, und aus dieser herausführbar ist, um das Reinigungsmittel (40) vom Querträger (20) zu entkoppeln, beispielsweise in einer Verschieberichtung Rv entlang der Haupterstreckungsachse A_{HL} des Längsträgers (10) in die Achselementaufnahme (34) einführbar und/oder aus dieser herausführbar ist.

11. Reinigungsvorrichtung nach einem der vorhergehenden Ansprüche, insbesondere Anspruch 10,
**dadurch gekennzeichnet, dass**
das Achselement (33) oder die Achselementaufnahme (34) kraftschlüssig mit dem Reinigungsmitteltrieb (25) gekoppelt sind.

12. Reinigungsvorrichtung nach einem der vorhergehenden Ansprüche,
**dadurch gekennzeichnet, dass**
das Reinigungsmodul (2) wenigstens zwei Querträger (20) und dazwischen, wenigstens ein, an gegenüberliegenden Innenseiten (35) der Querträger (20) gelagertes inneres Reinigungsmittel (40i) aufweist, und optional wenigstens ein, auf einer Außenseite (37) wenigstens eines der beiden Querträger (20) gelagertes und optional frei auskragendes äußeres Reinigungsmittel (44a) aufweist, oder
das Reinigungsmodul (2) einen Querträger (20) und wenigstens ein, auf einer Seite (35; 37) des Querträgers (20) gelagertes und optional frei auskragendes äußeres Reinigungsmittel (40a) aufweist, oder
wenigstens jeweils ein, auf gegenüberliegenden Seiten (35; 37) des Querträgers (20) gelagertes und optional frei auskragendes äußeres Reinigungsmittel (40a) aufweist.

13. Reinigungsvorrichtung nach einem der vorhergehenden Ansprüche,
**dadurch gekennzeichnet, dass**
betrachtet in einer Draufsicht auf den Längsträger (10) linksseitig und rechtsseitig Querträger (201, 20r) angeordnet oder anordbar sind, die Reinigungsmittel (40) tragen, wobei optional in hauptachsialer Abfolge entlang der Haupterstreckungsachse A_{HL}, die Querträger (201) der linken Seite und die Querträger (20r) der rechten Seite hintereinander versetzt angeordnet sind.

14. Reinigungsvorrichtung nach einem der vorhergehenden Ansprüche,
**dadurch gekennzeichnet, dass**
eine Mehrzahl an Reinigungsmodulen (2) entlang der Haupterstreckungsachse A_{HL} des Längsträgers (10) und/oder orthogonal zu dieser Haupterstreckungsachse miteinander, optional biegesteif, koppelbar ausgebildet sind.

15. Reinigungsvorrichtung nach einem der vorhergehenden Ansprüche,
**dadurch gekennzeichnet, dass**
ein Adaptermittel (50) zur Befestigung des Translationsmittels (60) am Längsträger (10) vorgesehen ist, wobei das Adaptermittel eine Adapter-Längsträgeraufnahme (57) umfasst, die mit dem Längsträger (10) koppelbar ist, wobei optional das Adaptermittel in einer Verschieberichtung Rv, insbesondere achsparallel zur Haupterstreckungsachse A_{HL} des Längsträgers (10) relativ zum Längsträger verschiebbar, insbesondere auf den Längsträger (10) aufsteckbar ist.

16. Reinigungsvorrichtung nach Anspruch 15,
**dadurch gekennzeichnet, dass**
die Adapter-Längsträgeraufnahme (57) des Adaptermittels (50) mit der Längsträgeraufnahme (27) des Querträgers (20) identisch und/oder entlang der Haupterstreckungsachse A_{HL} des Längsträgers (10) fluchtend ausrichtbar ausgebildet ist, so dass der Längsträger (10) wenigstens mit einem Durchführabschnitt (14) sowohl in die Längsträgeraufnahme (27) des Querträgers (20) als auch die Adapter-Längsträgeraufnahme (57) des Adaptermittels (50) einführbar ist.

17. Reinigungsvorrichtung nach Anspruch 15 oder 16,
**dadurch gekennzeichnet, dass**
das Adaptermittel (50) wenigstens einen Translationsantriebsmontagebereich (53) aufweist, zum kraftschlüssigen Anschluss einer Translationsantrieb (56), beispielsweise eines Elektromotors für das Translationsmittel (60).

18. Querträger für ein Reinigungsmodul (2) einer modularen Reinigungsvorrichtung insbesondere nach einem der vorhergehenden Ansprüche, umfassend:
einen ersten Abschnitt (21), insbesondere einen ersten Endabschnitt, mit dem der Querträger (20) an einem Längsträger (10) des Reinigungsmoduls (2) lösbar befestigbar ist, und
einen zweiten Abschnitt (22), mit dem der Querträger (20) lösbar an einem Reinigungsmittel (40), beispielsweise wenigstens einer rotierbaren Bürste, befestigbar ist,
weiter umfassend:
wenigstens einen Antriebsmittelmontagebereich (23), der im ersten Abschnitt (21) angeordnet ist, und an dem ein Antriebsmittel (24), beispielsweise ein Elektromotor, montiert oder montierbar ist,
wenigstens einen Reinigungsmitteltrieb (25), der im zweiten Abschnitt (22) angeordnet ist, und mit dem Reinigungsmittel (40) kraftschlüssig koppelbar ist, und
wenigstens einen Koppeltrieb (26), beispielswiese einen Kettentrieb, um das Antriebsmittel (24) kraftschlüssig mit dem Reinigungsmitteltrieb (25) zu koppeln, um so das Reinigungsmittel (40) anzutreiben.

19. Verfahren zur Montage einer Reinigungsvorrichtung (1) nach einem der Ansprüche 1- 17, umfassend die folgenden Schritte:
Aufsetzen des Reinigungsmittels auf eine Oberfläche; Koppelung des Reinigungsmittels mit wenigstens einem Querträgers (20) am zweiten Abschnitt;
Einführen des Längsträgers in die Längsträgeraufnahme des wenigstens einen Querträgers am zweiten Abschnitt, so dass zwischen Querträger und Längsträger die biegesteife Einspannung gebildet wird;
Schließen der Verschiebarretierung (30) wenigstens eines Querträgers (20) zur Verschiebarretierung des Querträgers am Längsträger.

20. Verfahren zur Adaption, insbesondere Anpassung der Abmessungen eines einer Reinigungsvorrichtung (1) nach einem der Ansprüche 1 - 17, umfassend die folgenden Schritte:
Aufsetzen des Reinigungsmittels auf eine Oberfläche unter Entlastung des wenigstens einen Querträgers (20);
Offnen der Verschiebarretierung (30) wenigstens eines Querträgers (20);
Verschieben des wenigstens einen Querträgers (20) relativ zum Längsträger (10) in Verschieberichtung unter Entkoppelung des Reinigungsmittels vom Querträger (20);
optional, Adaption des Längsträgers (10) in seiner Länge derart, dass eine neue geforderte Länge des Längsträgers (10) zur Herstellung eines in seiner Länge geänderten Reinigungsmittels erreicht wird;
Adaption des Reinigungsmittels in seiner Länge und/oder Austausch des Reinigungsmittels gegen ein anderes, beispielsweise in seiner Länge verschiedenes Reinigungsmittel (40);
Verschieben des wenigstens einen Querträgers (20) relativ zum Längsträger (10) in entgegengesetzter Verschieberichtung unter Kopplung des adaptierten Reinigungsmittels mit dem wenigstens einen Querträger (20).
